# EUROPEAN PATENT APPLICATION

(11) **EP 4 748 712 A1**
(43) Date of publication of application: **27.05.2026**
(21) Application number: 25199929.8
(22) Date of filing: 03.09.2025
(51) Int. Cl.: B64C 37/02, B64D 1/02

(54) **SYSTEM AND METHOD FOR MOVING A PAYLOAD**

(30) Priority: 20.11.2024 RU 2024134764
(71) Applicant: Andreev, Pavel Ruslanovich, 1086 Budapest (HU)
(72) Inventor: Andreev, Pavel Ruslanovich, 1086 Budapest (HU)
(74) Representative: Keller Schneider Patent- und Markenanwälte AG

(57) **Abstract**

The present invention relates to transportation equipment, in particular to means and methods for moving a payload, specifically to a system and method for moving a payload.

Provided are a system and method for moving a payload which are based on the use of aircraft apparatuses configured to dock to one another so as to enable mutual exchange of a docking guide and a payload. 2 independent claims, 9 figures.

## Description

### FIELD OF THE INVENTION

The present invention relates to transportation equipment, in particular to means and methods for moving a payload, specifically to a system and method for moving a payload.

### BACKGROUND OF THE INVENTION

To date, for transporting or moving a payload, there have been developed a wide variety of aerial transport systems and methods for moving a payload, which are based on the use of such aerial transport systems. Despite the operation of such aerial transport systems is highly automated, as well as the speed of transportation or movement of a payload to the point of destination using such aerial transport systems is acceptable, current aerial transport systems and current methods for moving a payload based on the use of such aerial transport systems still have a significant disadvantage of insufficient payload movement range.

There is therefore a need to develop methods and systems for moving a payload.

In particular, a variety of aerial transport systems and methods for moving a payload, which are based on the use of automated aircraft apparatuses, having each a housing having a variety of designs and provided with one or more aerial propulsion units that enable movement and navigation of said aircraft apparatus in airspace, have become widespread.

For example, Korean Patent No. 102254921 (hereinafter KR 102254921), issued under Korean Application No. 20190173104 (published on May 24, 2021), provides a system for moving a payload in the form of a power battery, comprising: (i) two or more aircraft apparatuses, each provided with one or more air propulsion units enabling said aircraft apparatus to be moved through the air; (ii) one or more control devices configured to control the operation of said aircraft apparatuses, wherein at least on one first aircraft apparatus of said aircraft apparatuses there is installed a payload and one or more docking guides, and at least on one second aircraft apparatus of said aircraft apparatuses there is installed one or more docking guides, at least one of which docking guides is configured to detachably dock to at least one of said guides of said at least one first aircraft apparatus for detachable docking in the air of said at least one first aircraft apparatus and said at least one second aircraft apparatus so as to enable the movement of said payload along said docked docking guides onto said at least one second aircraft apparatus. Furthermore, KR 102254921 discloses a method for moving a payload in the form of a movable power battery, which method is based on the use of a system for moving a payload according to KR 102254921.

Of note, in the system and method for moving a payload in the form of a power battery, which are disclosed in KR 102254921, as a result of moving the payload, by means of detachably coupled to one another guides of the aircraft apparatuses, from the first aircraft apparatus to the second aircraft apparatus of the payload in said means of transport, the total weight of the second aircraft apparatus increases, which leads to accelerated depletion of the battery charge of the second aircraft apparatus and, consequently, to a reduction in the payload movement range using this second aircraft apparatus.

Thus, the prior-art system for moving a payload disclosed in KR 102254921 and the prior-art method for moving a payload using said system for moving a payload disclosed in KR 102254921 also have the above disadvantage of insufficient payload movement range.

Thus, there is an obvious need for further improvement of prior-art systems and/or methods for moving a payload, in particular for increasing the payload movement range.

Therefore, the technical problem solved by the present invention is to create a system and method for moving a payload, in each of which there is at least partially ameliorated at least the above disadvantage in the prior-art system and method for moving a payload, of insufficient payload movement range.

### DISCLOSURE

The object of the present invention is to create a system and method for moving a payload, solving each at least the above-mentioned technical problem of the prior art, as well as to expand the range of technical means for moving a payload.

The task at hand is solved in the first aspect of the present invention by the fact that in the subject system comprising: (i) two or more aircraft apparatuses, each provided with one or more air propulsion units enabling said aircraft apparatus to be moved through the air; and (ii) one or more control devices configured to control the operation of said aircraft apparatuses, wherein at least on a first one of said aircraft apparatuses there is installed a payload, at least on a second one of said aircraft apparatuses there is detachably installed one or more docking guides configured to enable the detachable docking, in the air, of said at least one first aircraft apparatus and said at least one second aircraft apparatus for moving said payload along said at least one docking guide to said at least one second aircraft apparatus, followed by the transfer of at least one of said docking guides to said at least one first aircraft apparatus.

Furthermore, the task at hand is solved in the second aspect of the present invention by the fact that the subject method for moving a payload comprising the steps of: (i) docking to one another in the air at least one first aircraft apparatus on which there is installed a payload and at least one second aircraft apparatus on which there are installed one or more docking guides using at least one of said docking guides under the control of a control device, (ii) enabling movement of the payload along said at least one docking guide into said at least one second aircraft apparatus, further enabling said at least one docking guide to be transferred to said at least one first aircraft apparatus while the placement of the payload in said at least one second aircraft apparatus.

The above system for moving a payload according to the first aspect of the present invention and the method for moving a payload according to the second aspect of the present invention each provide a technical result of reduced weight of the aircraft apparatus used for moving a payload, in particular thanks to the transfer, by the second aircraft apparatus, of the docking guide thereof to the first aircraft apparatus.

The above technical advantage of the claimed group of technical solutions is not limiting. Additional advantages of the claimed group of technical solutions and individual technical solutions in said group, including particular embodiments thereof, will become apparent to one skilled from the following detailed description of the present invention and the accompanying drawings.

Furthermore, the above-described first and second aspects of the present invention provide each an additional technical result of improved mass and size characteristics of the aircraft apparatus used for moving a payload.

Furthermore, the above-described first and second aspects of the present invention provide each yet another additional technical result of additional saving of battery charge of the aircraft apparatus used for moving a payload.

Furthermore, the above first and second aspects of the present invention provide each yet another additional technical result of expanded range of technical means for moving a payload through the air.

### BRIEF DESCRIPTION OF DRAWINGS

The accompanying drawings which are included to provide further understanding of the principles of the present invention constitute a part hereof and are incorporated herein to illustrate the below embodiments and aspects of the present invention. The accompanying drawings, together with the description below, serve to explain the principles of the present invention. In the drawings:

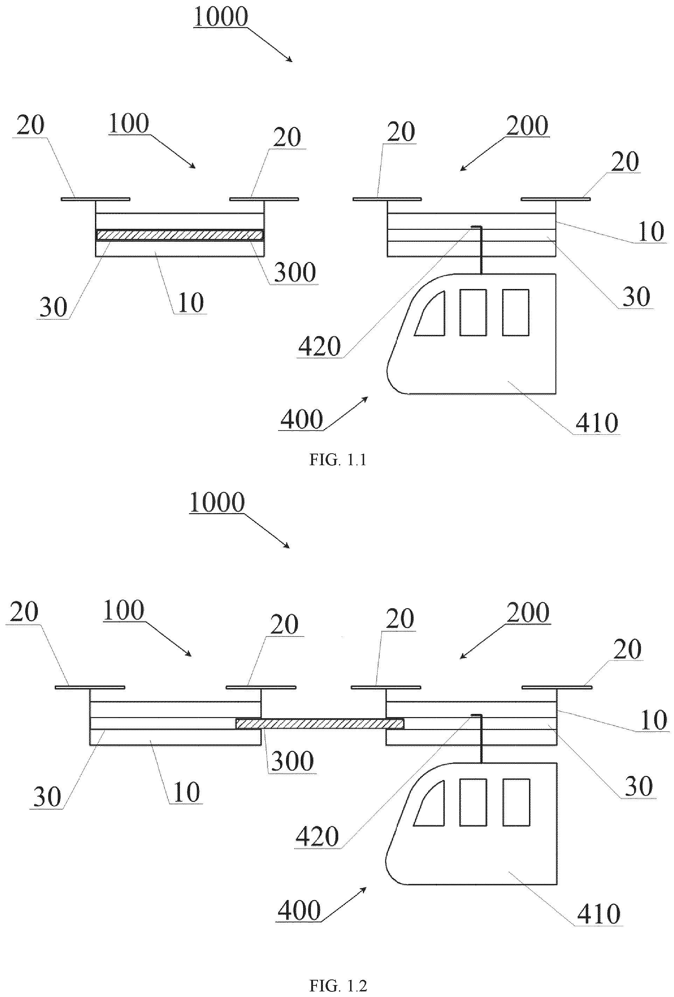

Fig. 1.1 is a schematic view of one of the illustrative embodiments of the first system for moving a payload according to the first aspect of the present invention in the first (initial) state, in which state the aircraft apparatus with the docking guide and the aircraft apparatus with the payload are present at a distance from one another in a predetermined region of space;
Fig. 1.2 is a schematic view of the first system for moving a payload according to the present invention in a second state, into which state this first system transits from the first state as shown in Fig. 1.1, and in which state the aircraft apparatuses are detachably docked to one another by means of the docking guide;

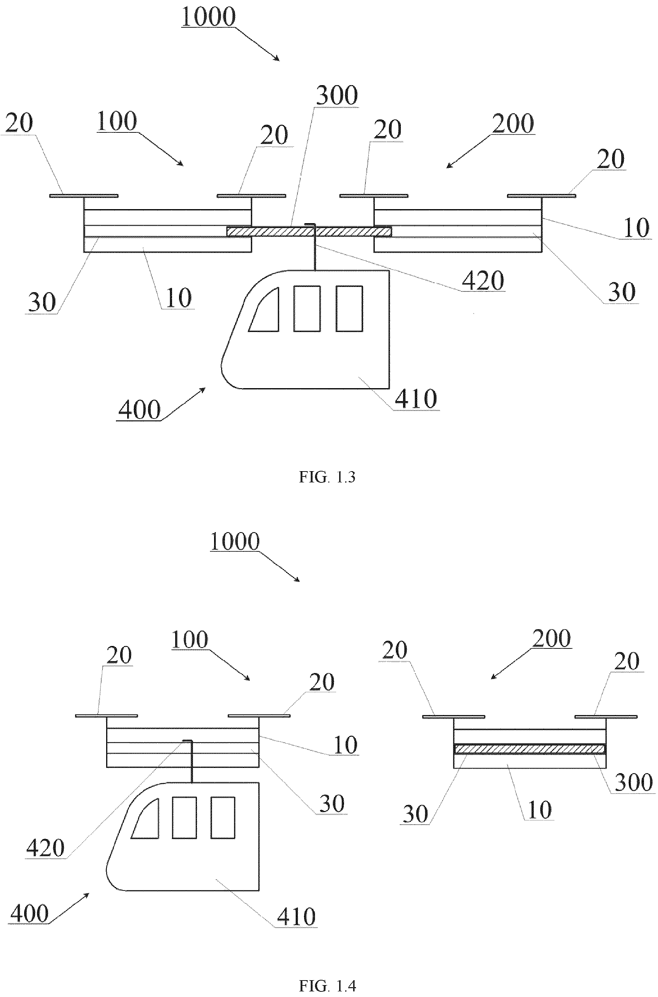

Fig. 1.3 is a schematic view of the first system for moving a payload according to the present invention in a third state, into which state this first system transits from the second state as shown in Fig. 1.2, and in which state the payload is placed on the docking guide detachably docking the aircraft apparatuses to one another;
Fig. 1.4 is a schematic view of the system for moving a payload according to the present invention in a fourth state, into which state this first system transits from the third state as shown in Fig. 1.3, and in which state the aircraft apparatuses have exchanged between one another the payload and docking guide;

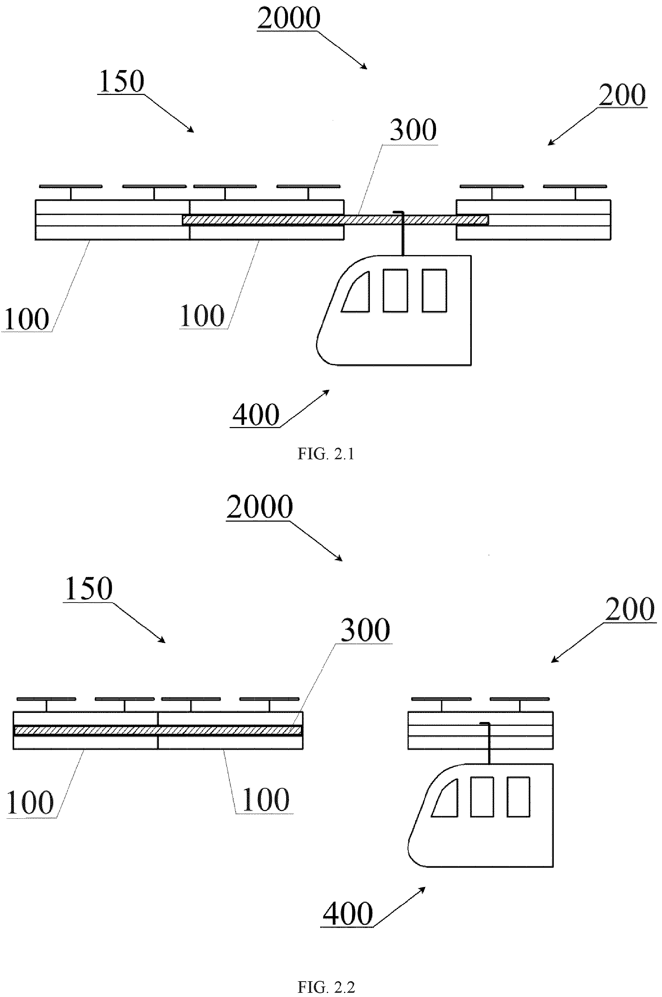

Fig. 2.1 is a schematic view of one of the illustrative embodiments of the second system for moving a payload according to the present invention in a state in which the cluster aircraft apparatus with the docking guide and the aircraft apparatus with the payload are present at a distance from one another in a predetermined region of space;
Fig. 2.2 is a schematic view of the second system for moving a payload according to the present invention in a state in which state the cluster aircraft apparatus is detachably coupled to the aircraft apparatus with the payload by means of the docking guide extended from said cluster aircraft;

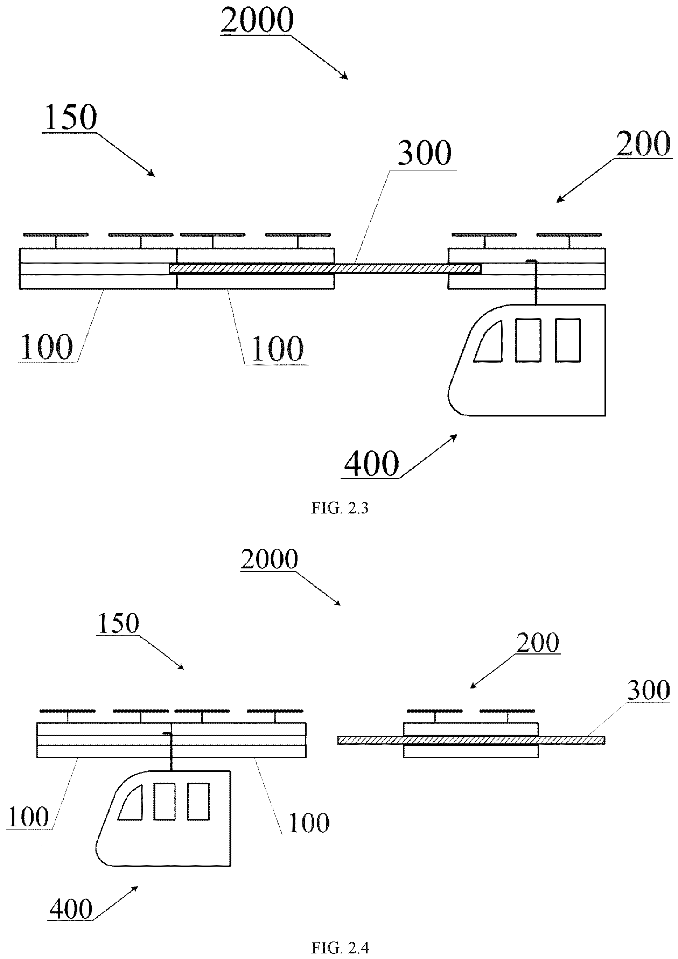

Fig. 2.3 is a schematic view of the second system for moving a payload according to the present invention in a state in which state the payload is placed on the docking guide detachably coupling the aircraft apparatuses to one another;
Fig. 2.4 is a schematic view of the second system for moving a payload according to the present invention in a state in which state the payload is placed on the cluster aircraft apparatus, and the docking guide is placed on the other aircraft apparatus which was detachably coupled in Fig. 2.3 to said cluster aircraft apparatus by means of said docking guide;

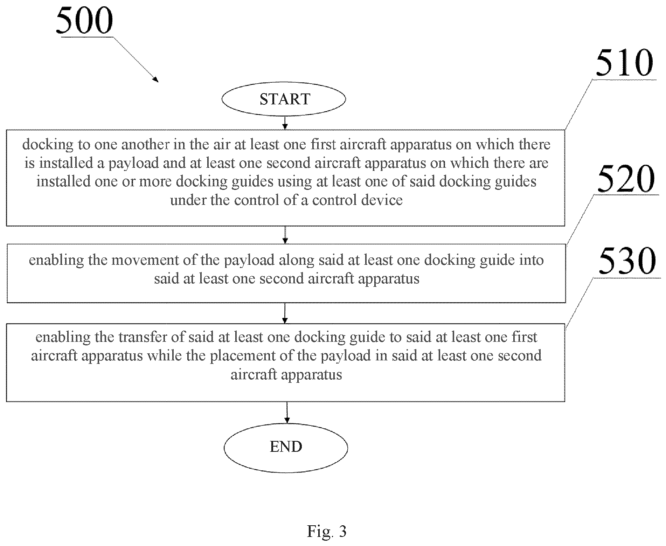

Fig. 3 is a block diagram of one of the illustrative embodiments of the method for moving a payload according to the present invention.

### DETAILED DESCRIPTION

Hereinafter, some exemplary embodiments of the present invention will be described with reference to the accompanying drawings; however, it should be understood that the description below does not define or limit the scope of the present invention.

In the following description, a detailed description of known functions and designs will be omitted as this unimportant information may obscure the concept of the present invention.

It is to be understood that in the following description the terms such as "first", "second", "upper", "lower", "lateral", "front", "rear", and the like are used solely for convenience, and they should not be interpreted as limiting terms. In particular, as used in the present invention, unless explicitly stated otherwise in the description herein, the terms "first", "second", "third" or the like are used to distinguish elements, components, parts, assemblies, modules, blocks, embodiments or the like, to which they pertain, from one another and not meant to describe any particular relationship therebetween.

References to an item in the singular should be understood to include such items in the plural, and vice versa, unless explicitly stated otherwise or clear from the context herein.

Grammatical conjunctions are intended to express any and all disjunctive and conjunctive combinations of conjoined clauses, sentences, words and the like, unless otherwise stated or clear from the context. Thus the term "or" should be understood to generally mean "and/or" and so forth.

Recitation of ranges of values herein is not intended to be limiting, referring instead individually to any and all values falling within the range, unless otherwise indicated herein, and each separate value within such a range is incorporated into the description as if it was individually recited herein.

Words "about," "approximately" or the like, when accompanying a numerical value, are to be construed as including any deviation as would be understood by one of ordinary skill in the art to operate satisfactorily for an intended purpose. Ranges of values and/or numeric values are provided herein as examples only, and do not constitute a limitation on the scope of the described embodiments.

Any and all examples provided herein or at least a portion thereof, as well as corresponding phrases ("for example", "such as", "in particular" or the like), are used merely to facilitate understanding of the principles of the present invention and to provide for sufficient disclosure of the present invention; however, these phrases do not pose any limitations on the embodiments of the present invention, for description of which embodiments they are utilized herein, in particular they do not limit practical implementations of elements, components, parts, assemblies, modules, blocks, devices, means and/or the like utilized to disclose the principles of design and operation of the present invention.

### Terms and definitions used in the description herein

The term "illustrative" means a non-limiting example, instance or illustration. In a similar manner, the terms "for example" and "by way of example" used herein set off lists of one or more non-limiting examples, instances or illustrations.

As used in the present invention, the term "correspondence" and derivatives thereof (i.e. adjective, verb, adverb) does not necessarily mean exact conformity or exact equality in/to/between whatsoever in any respect but may imply a departure or deviation from said equality within specified limits. For example, the term "corresponding coordinates", unless the description herein clearly dictates otherwise, means not only that these coordinates may be exactly equal to one another or may exactly coincide with one another but also implies that said equality or coincidence of coordinates may be established with some error (for example, with the error of operation of a GPS system) or within the bounds of a predetermined geographic region surrounding an exact geographic point or region to which these coordinates belong or an exact geographic location to which these coordinates belong.

As used in the present invention, the term "unmanned aircraft apparatus" (UAA), unless the description herein clearly dictates otherwise, refers to an unmanned aerial means of transport which is configured to fly or which is capable of moving through the air in automatic mode, i.e. without involving a human or external control sources, or is capable of moving through the air in semi-automatic mode, i.e. with receipt of at least a portion of control commands from a human (for example, a pilot, an operator or the like) or an external source (for example, a control panel, control server, external control device or the like) via predetermined communication links. Unlimited examples of UAAs are a variety of multi-rotor UAAs, for example, multicopter drones; single-rotor UAAs, for example, unmanned helicopter; hybrid UAAs, for example, rotary wing drones; and the like.

In the context of the present invention, the term "housing", unless the description herein clearly dictates otherwise, refers to a framework, skeleton, shell, panelling, fuselage, load-bearing structure or housing of a physical inanimate object, each of which may be formed from a single load-bearing element or a combination of coupled to one another load-bearing elements, wherein the type, shape, overall dimensions, design features and/or material of such housing are not specifically limited in any way.

In the context of the present invention, the term "payload", unless the description herein clearly dictates otherwise, refers to people or living beings (in particular, to people or living beings as such or people or living beings placed into a capsule, cabin, accommodation module, cryomodule, rescue module, living compartment, living block and the like) or to cargo (to cargo as such or to cargo placed into crates, boxes, packages, bags, containers, reservoirs, vessels, tanks, canisters, receptacles, barrels, cisterns, cylinders, vessels, reservoirs, packs, bottles, flasks, glass containers, cylinders, cases, storage modules and the like) which may be accommodated in/on the housing of the means of transport performing the function of a carrier and intended for delivery, shipment, transportation or movement of people, a variety of living beings, and/or a variety of cargos through the air.

As used in the present invention, the term "module", unless the description herein clearly dictates otherwise, refers to a functional element or a combination of functional elements of a device in the form of a part, node, block or other assembly unit that performs certain technical functions that provide for the functioning of the device. The module generally may be implemented in practice using a combination of known structural elements, a combination of known structural elements and known hardware, a combination of known structural elements and known software and hardware or a combination of known hardware and known software. Accordingly, for example, the control module may be implemented using hardware and software. As used in the present invention, the module of integrated control may be a physical device, an apparatus or a plurality of modules implemented using hardware, for example, using an application-specific integrated circuit (ASIC) or a field-programmable gate array (FPGA) or a combination of hardware and software, for example, using a microprocessor system and a set of instructions implementing the functionality of the control unit, which (when executed) transform the microprocessor system into an application-specific device or system (for example, autopilot). Furthermore, each of the modules described herein or at least one of them, may be implemented in the form of a combination of hardware and software, wherein some of the functionality described herein with respect to one of the modules may be implemented by means of hardware only, whereas other functionality described herein with respect to the same module or other module may be implemented by way of using hardware in combination with software. Furthermore, in the context of the present invention, the docking module may be configured to detachably interact with at least one unmanned aircraft apparatus, wherein the docking module may be implemented using a combination of known structural elements, a combination of known structural elements and hardware, a combination of structural elements and software and hardware or a combination of hardware and software.

As used in the present invention, the term "navigation command", unless the description herein clearly dictates otherwise, refers to an instruction directed to aircraft apparatuses being part of the system for moving a payload. Navigation commands may be presented or provided by the movement control system of the aircraft apparatus in the form of digital or analog data, instructions, control signals or the like. Navigation commands may be initially generated by, without limitation, an automatic operator, an operator (whether locally or remotely situated) and/or an obstacle-avoidance system. **In** the case of aircraft apparatuses, navigation commands may be communicated to, for example, a control unit to control an aircraft apparatus or a steering system of an aircraft apparatus.

As used in the present invention, the term "manual control", unless the description herein clearly dictates otherwise, refers not only to control solely using human hands but also using human feet, fingers, voice, pupils or any suitable combination thereof. Thus, as used in the present invention, the term "manual control" refers to at least one of the following: buttons, levers, joysticks, toggle switches, pedals, touch screen, gesture control sensors, pupil-tracking scanners, microphone and/or the like.

As used in the present invention, the term "charging device", unless the description herein clearly dictates otherwise, refers to a device for replenishing the range of an aircraft apparatus by way of recharging the rechargeable battery thereof and/or by replenishing the fuel capacity thereof.

As used in the present invention, the term "database", unless the description herein clearly dictates otherwise, refers to any structured data set that does not depend on a specific structure, database management software, hardware of the computer that stores data, uses data or otherwise makes data available for use. The database may be present on the same hardware running the process that stores or uses the information stored in the database or it may be present on separate hardware, for example, a dedicated server or on a plurality of servers.

As used in the present invention, the term "control device" refers to computing equipment executing a computer program for enabling receipt of requests (for example, from other computing devices) over a communication network, execution or processing of such requests and/or transmission of such requests over a communication network (for example, to other computing devices). The computing equipment executing a computer program may be, without limitation, a single physical computer or a single physical computer system. As used in the present invention, the use of the term "control device" does not mean that each computational task (for example, received instructions or commands) or any other specific task will be received, executed or cause performance by one and the same control device (i.e. by one and the same software and/or hardware), which means that any quantity of pieces of software or hardware may be involved in receiving/transmitting, executing or may cause performance of any task or request or the consequences of any task or request, where all that software and hardware may be implemented in the form of one or more control devices.

As used in the present invention, the term "server" refers to computing equipment executing a computer program for enabling receipt of requests (for example, from other computing devices) over a communication network, execution or processing of such requests and/or transmission of such requests over a communication network (for example, to other computing devices). The computing equipment executing a computer program may be, without limitation, a single physical computer or a single physical computer system. As used in the present invention, the use of the term "server" does not mean that each computational task (for example, received instructions or commands) or any other specific task will be received, executed or cause performance by one and the same server (i.e. one and the same software and/or hardware), which means that any quantity of pieces of software or hardware may be involved in receiving/transmitting, executing or may cause performance of any task or request or the consequences of any task or request, where all that software and hardware may be implemented in the form of one or more servers.

### First system for moving a payload

Fig. 1.1-1.4 is a schematic view of one of the illustrative embodiments of the first system 1000 for moving a payload according to the first aspect of the present invention, comprising two aircraft apparatuses 100, 200, each having a framework or housing 10 provided with two bladed air propulsion units 20 installed on the external side of the housing 10 so as to enable the flight or movement of said aircraft apparatus through the air or in airspace along a predetermined trajectory to a predetermined (target) point of destination, including in accordance with the flight program described below.

In some embodiments of the present invention, the system 1000 may include one or more aircraft apparatuses 100 and one or more aircraft apparatuses 200. In other embodiments of the present invention, the system 1000 may comprise, for example, two, three, four, five, six, seven, eight, nine, ten, eleven, twelve or more aircraft apparatuses, at least one of which may be configured in the form of the aircraft apparatus 100 described herein, and at least one other aircraft apparatus of said aircraft apparatuses of the system 1000 may be configured in the form of the aircraft apparatus 200 described herein.

Each of the aircraft apparatuses 100, 200 being part of the system 1000 may be configured in the form of any suitable unmanned aircraft apparatus (UAA) known in the prior art.

In other embodiments of the present invention, at least one or each of the aircraft apparatuses 100, 200 being part of the system 1000 may be provided with one or more air propulsion units 20 operating under the control of the below-described control module being part of said aircraft apparatus so as to enable the flight or movement of said aircraft apparatus through the air or in airspace along a predetermined trajectory to a predetermined (target) point of destination.

The housing 10 in at least one or each of the aircraft apparatuses 100, 200 being part of the system 1000 may have any suitable shape and overall dimensions characteristic of any aircraft apparatus known in the prior art and may be made of any suitable material known in the prior art and typically used for the manufacture of the housings of aircraft apparatuses, in particular of a cluster material (for example, cluster sandwich panels), metal (for example, coupled to one another metal channel beams), aluminum (for example, coupled to one another aluminum carrying beams), plastic (for example, a solid piece of plastic), titanium material (for example, titanium sandwich panels), any other suitable material known in the prior art, including using any suitable combination of the above materials (for example, of a sandwich panel or titanium panels with an aluminum honeycomb core) and/or the like. Thus, the type, shape, overall dimensions, and material of the housing 10 in each of the aircraft apparatuses 100, 200 being part of the system 1000 are not specifically limited in any way within the scope of the present invention. **In** particular, the housing 10 in at least one or each of the aircraft apparatuses 100, 200 being part of the system 1000 may have a shape which is generally identical to the housing of a helicopter or drone; one skilled in the art would however appreciate that the housing 10 may have any other shape similar to any other aircraft apparatus or air transport vehicle, for example, to an airplane, shuttle, hang glider, paraglider or any other analogous aircraft apparatus known in the prior art.

In one embodiment of the present invention, the housing 10 in at least one or each of the aircraft apparatuses 100, 200 being part of the system 1000 may be configured in the form of a regular or irregular three-dimensional geometric figure, for example, in the form of a cube, cuboid, ball or sphere, square pyramid, tetrahedron (triangular pyramid), hexagonal pyramid, triangular prism, hexahedron (octahedron), pentagonal prism, hexagonal prism, dodecahedron, ellipsoid, 20-sided polyhedron (icosahedron), cone, cylinder or any other known three-dimensional figure.

In another embodiment of the present invention, at least a portion of the housing 10 in at least one or each of the aircraft apparatuses 100, 200 being part of the system 1000 may have a sectional (longitudinal- or cross-sectional) shape of a triangle, square, circle, oval, rectangle, parallelogram, rhombus, trapezium, quadrilateral, pentagon, hexagon, heptagon, octagon, nonagon, decagon, icosagon or any other known regular or irregular geometric figure.

In yet another embodiment of the present invention, the housing 10 in at least one or each of the aircraft apparatuses 100, 200 being part of the system 1000 may be a skeleton, framework or bearing frame on which there may be attached panelling or which may be at least partially surrounded by a shell.

In other embodiments of the present invention, the housing 10 in at least one or each of the aircraft apparatuses 100, 200 being part of the system 1000 may be further provided with fins, wings and/or tail rotor, etc. to improve the aerodynamic characteristics of said aircraft apparatus and improve the carrying capacity thereof by generating additional lift when in flight.

In some other embodiments of the present invention, the housing 10 in at least one or each of the aircraft apparatuses 100, 200 being part of the system 1000 may be further provided with at least one aircraft apparatus engine (not shown), and preferably two aircraft apparatus engines, for enabling said aircraft apparatus to move through the air in the event of an emergency (for example, in the event of failure or breakdown of at least one or each of the air propulsion units 20) or for increasing the speed of movement through the air of said aircraft apparatus by enabling the operation of the aircraft apparatus engines further to or instead of the propulsion units 20 used to move said aircraft apparatus through the air in a standard situation). Of note, each such aircraft apparatus engine may be, for example, a propeller engine, jet engine, combined aircraft apparatus engine or any other suitable aircraft apparatus engine known from the prior art. It should also be noted that in case of using two aircraft apparatus engines in at least one or each of the aircraft apparatuses 100, 200 the designs and/or types thereof may coincide or be different from one another. Each such aircraft apparatus engine which may be further provided to the housing 10 in at least one or each of the aircraft apparatuses 100, 200 may operate under control of the control module of said aircraft apparatus which may present control commands to the control driver of the aircraft apparatus engine of said aircraft apparatus so as to enable starting, stopping or altering of the operating mode of said aircraft apparatus engine (for example, altering of the operating parameters of this aircraft apparatus engine of the aircraft apparatus).

In some other embodiments of the present invention, the housing 10 in at least one or each of the aircraft apparatuses 100, 200 being part of the system 1000 may be further provided with at least one additional lift rotor (not shown) or rotor propulsion unit of any suitable type known in the prior art for enabling said aircraft apparatus to move through the air (including in an emergency, for example, in the event of damage, failure and/or complete discharge of this aircraft apparatus) or for increasing the speed of movement through the air of said aircraft apparatus by enabling the operation of the lift rotor or rotor propulsion unit further to or instead of the propulsion units 20 used to move said aircraft apparatus through the air in a standard situation. Furthermore, in this embodiment of the present invention, the housing 10 in at least one or each of the aircraft apparatuses 100, 200 being part of the system 1000 may further comprise a power plant (not shown) which may be defined, for example, by one or two turboshaft engines and which may be operably coupled to each of the lift rotors of said aircraft apparatus so as to enable supply of power thereto for actuating same. Each such power plant in at least one or each of the aircraft apparatuses 100, 200, which power plant is operably coupled to the lift rotors of said aircraft apparatus which lift rotors may be further provided to the housing 10 in a manner to transfer driving force thereto, may operate under control of the control module of this aircraft apparatus which control module may present control commands to the control driver of the power plant (not shown) of this aircraft apparatus so as to enable starting, stopping or altering of the operating mode of said power plant (for example, altering of the operating parameters of this power plant of the aircraft apparatus) for altering the state of those lift rotors of said aircraft apparatus.

In other embodiments of the present invention, the housing 10 in at least one or each of the aircraft apparatuses 100, 200 being part of the system 1000 may be further provided with a landing gear (not shown) which may be a system of extendable supports or at least one rigidly secured support which may be provided to the housing 10 and which may be necessary for at least takeoff of said aircraft apparatus, landing of said aircraft apparatus and/or accommodation of said aircraft apparatus in one of the parking stations for replenishing the range thereof. In particular, the landing gear in at least one or each of the aircraft apparatuses 100, 200 may be of a skid type, a wheel type, a tracked type, a float type or any other type known in the prior art, wherein the type, shape, overall dimensions and material of the landing gear in this aircraft apparatus are not specifically limited in any manner within the scope of the present invention. Of note, in this embodiment of the present invention, the landing gear in at least one or each of the aircraft apparatuses 100, 200 may at least provide for (i) bearing of static loading from its own weight while said aircraft apparatus is in a parked state; and (ii) shock absorption of dynamic loads arising while landing of said aircraft apparatus (including emergency landing) on the surface of the ground, water or that of another physical object at least partially present in the air space, on the ground space, in the water space and/or in underwater space, depending on a particular embodiment of the present invention.

In some other embodiments of the present invention, the housing 10 in at least one or each of the aircraft apparatuses 100, 200 being part of the system 1000 may as well not be provided with any type of landing gear. In one of the variations of such embodiment of the present invention, the bottom of the housing 10 in at least one or each of the aircraft apparatuses 100, 200 being part of the system 1000 may be provided with a shock-absorbing pad (not shown) made of an elastic material (for example, rubber) which shock-absorbing pad may be attached to said bottom from the external side thereof or with any other suitable support known in the prior art and used in the prior art for known aircraft apparatuses (in particular, for drones or other unmanned aircraft apparatuses).

Furthermore, in the housing 10 of each of the aircraft apparatuses 100, 200 being part of the system 1000 there are disposed or installed a communication module (not shown) and a control module (not shown) which is operably coupled to the both bladed air propulsion units 20 so as to control the operation thereof and operably coupled to the communication module so as to communicate therewith. In particular, the control module in each of the aircraft apparatuses 100, 200 may be configured to switch on (activate or put into operation) at least one or each of the air propulsion units 20, and may also be configured to switch off (deactivate) at least one or each of the air propulsion units 20. Furthermore, the control module in each of the aircraft apparatuses 100, 200 may be configured to alter the rotation speed of the blades of at least one or each of the air propulsion units 20, and/or to alter the direction of rotation of the blades of at least one or each of the air propulsion units 20.

Furthermore, in the housing 10 of each of the aircraft apparatuses 100, 200 being part of the system 1000 there is accommodated or installed a power source (not shown) coupled via a power supply circuit (not shown) to the both air propulsion units 20, control module and to the communication module so as to enable the supply of power thereto or to enable same to be powered under the control of said control module.

In Fig. 1.1, the first system 1000 for moving a payload according to the first aspect of the present invention is in the first (initial or original) state in which the aircraft apparatus 100 and the aircraft apparatus 200 are present in the air in a predetermined region of space at a predetermined distance from one another, wherein the aircraft apparatuses 100, 200 may occur to be in said region of space, for example, while performing the individual flight programs thereof received by same via the communication network from one and the same control device of the system 1000 or from the respective control devices of the system 1000.

As shown in Fig. 1.1, the aircraft apparatus 100 is provided with a docking guide 300 detachably installed on the aircraft apparatus 100 (in particular, in or on the housing 10 thereof) or detachably coupled to the housing 10 thereof so as to move with respect to this housing 10 so as to enable entering into a detachable interaction with the aircraft apparatus 200 for providing for the detachable docking of these aircraft apparatuses 100, 200 to one another and so as to enable withdrawal from interaction with the aircraft apparatus 200 for transferring this docking guide 300 to the aircraft apparatus 200 or for detachably placing this docking guide 300 on the aircraft apparatus 200 (in particular, in or on the housing 10 thereof). Furthermore, as shown in Fig. 1.1, the aircraft apparatus 200, in turn, is provided with a payload 400 detachably installed on the aircraft apparatus 200 (in particular, on or at least partially interiorly to the housing 10 thereof) or detachably coupled to the housing 10 thereof so as to move with respect to this housing 10 so as to enable detachable placement or detachable installation of said payload 400 on the docking guide 300 in the case, when this docking guide 300 detachably couples the aircraft apparatuses 100, 200 to one another, for moving this payload 400 along said docking guide 300 towards the aircraft apparatus 100 and so as to enable this payload 400 to be withdrawn from interaction with said docking guide 300 for transferring said payload 400 to the aircraft apparatus 100 or for detachably placing said payload 400 on the aircraft apparatus 100 (in particular, on or at least partially interiorly to the housing 10 thereof).

In some embodiments of the present invention, the aircraft apparatus 200 may be provided with two or more payloads 400 detachably installed each on the aircraft apparatus 200 so as to move with respect to the housing 10 thereof.

In other embodiments of the present invention, the aircraft apparatus 100 may be provided with two or more guides 300 detachably installed each on the aircraft apparatus 100 or detachably coupled each to the housing 10 thereof so as to move with respect to the housing 10 thereof. In one of the variations of such embodiments of the present invention, one or more of the docking guides 300 which may be provided to the aircraft apparatus 100 may be simultaneously or sequentially engaged or used to provide for the detachable docking of the aircraft apparatus 100 to the aircraft apparatus 200, wherein the payload 400 may be placed or installed so as to move only on at least one of said engaged docking guides 300. In one of the variations of this type of such embodiments of the present invention, at least one or each of the docking guides 300 used to accommodate the payload 400 on same while docking the aircraft apparatuses 100, 200 to one another may be transferred to the aircraft apparatus 200 so as to be detachably placed/installed in or on the housing 10 thereof, wherein all other docking guides 300 used for docking the aircraft apparatuses 100, 200 to one another may be returned to the original (initial) states thereof in which they are present on the aircraft apparatus 100, in particular, they may be returned to the original locations thereof interiorly to the housing of the aircraft apparatus 100 or on the housing of the aircraft apparatus 100. In another variation of this type of such embodiments of the present invention, all docking guides 300 used for docking the aircraft apparatuses 100, 200 to one another, including each docking guide 300 used for accommodating thereon the payload 400 while docking the aircraft apparatuses 100, 200 to one another may be transferred to the aircraft apparatus 200 so as to be detachably placed/installed on the housing 10 thereof or at least partially interiorly to the housing 10 thereof.

In other embodiments of the present invention, the aircraft apparatus 100 may be provided with two or more docking guides 300 detachably installed each on the aircraft apparatus 100 or detachably coupled each to the housing 10 thereof so as to move with respect to the housing 10 thereof, wherein at least two of said docking guides 300 may be arranged parallel to one another, perpendicular to one another or at a predetermined angle with respect to one another.

In some other embodiments of the present invention, the aircraft apparatus 100 may be provided with two or more docking guides 300 detachably installed each on the aircraft apparatus 100 or detachably coupled each to the housing 10 thereof so as to move with respect to the housing 10 thereof, wherein at least one of said docking guides 300 may be installed on a rotary device (not shown) which may be provided to the aircraft apparatus 100 and which may operate under the control of the control module of the aircraft apparatus 100 so as to enable the rotation of said at least one docking guide 300 by a predetermined angle of rotation after the partial extension thereof from the housing 10 in the direction away from the aircraft apparatus 100. Of note, in such embodiments of the present invention, the housing 10 in the aircraft apparatus 100 must be configured to enable rotation of at least one of the docking guides 300 which is partially extended from this housing 10 by a predetermined angle of rotation set using such rotary device of the aircraft apparatus 100 under the control of the control module of the aircraft apparatus 100.

In some other embodiments of the present invention, the aircraft apparatus 100 may be provided with two or more docking guides 300 detachably installed each on the aircraft apparatus 100 or detachably coupled each to the housing 10 thereof so as to move with respect to the housing 10 thereof, wherein at least one of said docking guides 300 may be rotatably installed on said housing 10, wherein said housing 10 may further comprise a drive device (not shown) operating under the control of the control module of the aircraft apparatus 100 and operably coupled to said at least one docking guide 300 or configured to interact with said at least one docking guide 300 so as to enable rotation thereof by a predetermined angle of rotation after partial extension thereof from the housing 10 in the direction away from the aircraft apparatus 100. Of note, in such embodiments, too, of the present invention, the housing 10 in the aircraft apparatus 100 must be configured to enable rotation of at least one of the docking guides 300 which is partially extended from this housing 10 by a predetermined angle of rotation set using such rotary device of the aircraft apparatus 100 under the control of the control module of the aircraft apparatus 100.

In some other embodiments of the present invention, the aircraft apparatus 100 may be provided with one or more docking guides 300 detachably installed each on the aircraft apparatus 100 or detachably coupled each to the housing 10 thereof so as to move with respect to the housing 10 thereof, wherein at least one or each of said docking guides 300 may be configured telescopic, and the housing 10 in this aircraft apparatus 100 may further comprise a drive device (not shown) operating under the control of the control module of the aircraft apparatus 100 and operably coupled to said docking guide 300 or configured to interact with said docking guide 300 so as to enable at least partial or complete extension thereof from said housing 10. Of note, in such embodiments of the present invention, the control module of the aircraft apparatus 100 is further configured to present control commands to the driver of the drive device so as to enable at least partial retraction of said extended docking guide back into the housing 10.

According to one embodiment of the present invention, the housing 10 in the aircraft apparatus 100 may be configured to tilt or rotate by a predetermined angle with respect to at least one of the docking guides 300 which may be provided to said housing 10.

According to another embodiment of the present invention, the housing 10 in the aircraft apparatus 100 may be configured to alter the shape thereof and/or the dimensions thereof under the control of the control module of the aircraft apparatus 100 while the docking of this aircraft apparatus 100 to the aircraft apparatus 200 by means of at least one of the docking guides 300 which may be provided to said housing 10, thus making it possible to adapt this housing 10 to the shape and/or overall dimensions of the payload 400 which may subsequently be transferred to the aircraft apparatus 100 and accommodated in the housing 10 thereof.

According to yet another embodiment of the present invention, at least one of the docking guides 300 which may be provided to the housing 10 in the aircraft apparatus 100 may be at least partially configured bendable or flexible.

According to one other embodiment of the present invention, at least one of the docking guides 300 which may be provided to the housing 10 in the aircraft apparatus 100 may be configured rectilinear or curvilinear.

According to some embodiment of the present invention, at least one of the docking guides 300 which may be provided to the housing 10 in the aircraft apparatus 100 may be configured to enable the payload 400 to move therealong along at least one of the three coordinate axes or may be configured to move with respect to said housing 10 so as to enable movement of the payload 400, placed or installed on said at least one docking guide 300, with respect to said housing 10.

According to some other embodiment of the present invention, at least one of the docking guides 300 which may be provided to the housing 10 in the aircraft apparatus 100 may be comprised of two or more portions, of which at least one is configured movable, wherein said housing may further comprise a drive device (not shown) operating under the control of the control module of the aircraft apparatus 100 and operably coupled to said at least one movable portion of the docking guide 300 so as to enable movement thereof with respect to the remaining portions of this docking guide 300 for altering the shape of said at least one docking guide 300.

Thus, the housing 10 in each of the aircraft apparatuses 100, 200 being part of the system 1000 is substantially configured to accommodate thereon the docking guide 300 or the payload 400, wherein the housings 10 in these aircraft apparatuses 100, 200 are substantially configured structurally identical, in particular they have shapes and sizes that correspond to one another, and are also provided each with technical means that enable the placement of the docking guide 300 or the payload 400 on each of them and enable the movement of said docking guide 300 or payload 400 with respect to said housing under the control of the control module of said aircraft apparatus.

In various embodiments of the present invention, the payload 400 may be detachably installed on the aircraft apparatus 100 instead of the aircraft apparatus 200, and the docking guide 300 may be detachably installed on the aircraft apparatus 200 instead of the aircraft apparatus 100.

In other embodiments of the present invention, the payload 400 may be detachably installed on at least one first aircraft apparatus of the aircraft apparatuses being part of the system 1000, and the docking guide 300 may be detachably installed on at least one second aircraft apparatus of the aircraft apparatuses being part of the system 1000, wherein said at least one first aircraft apparatus of the system 1000 and said at least one second aircraft apparatus of the system 1000 may be configured, for example, in the form of the aircraft apparatus 200 and the aircraft apparatus 100, respectively.

Furthermore, the system 1000 shown in Figs. 1.1-1.4 also comprises one or more control devices configured each to establish a wireless connection or wireless communication link over a communication network (not shown) with at least one of the aircraft apparatuses 100, 200 so as to enable the presenting of the control commands and/or navigation commands to said at least one aircraft apparatus so as to enable the remote control of the operation or functioning thereof, wherein said communication network may be part of the system 1000, or may as well not be part of the system 1000.

The communication network of the system 1000 to which there are at least communicatively coupled one or more control devices of the system 100 and the aircraft apparatuses 100, 200 substantially allows said control devices of the system 1000 and the aircraft apparatuses 100, 200 to exchange system data and/or operational data between one another, which data they use to implement the functions or functional capabilities thereof described herein. Such communication network may be, for example, any suitable wireless communication link known in the prior art, such as a WiFi wireless technology-based communication link, 2G, 3G, 4G or 5G wireless technology-based communication link, LTE technology-based communication link and/or the like.

In one of the embodiments of the present invention, the system 1000 may comprise two or more wireless networks configured each analogously to the above communication network of the system 1000 for performance of communication between the control devices of the system 1000, aircraft apparatuses 100, 200 and/or any other functional devices which may further be part of the system 1000 and/or which are described herein, in the real-time mode or in real time.

Of note, the communication module (not shown) installed in the housing 10 of each of the aircraft apparatuses 100, 200 being part of the system 1000 is configured to receive external control commands and/or navigation commands from at least one of the control devices of the system 1000, which commands are transmitted over the communication network, so as to enable presentation thereof, via the communication bus, to the control module being part of said aircraft apparatus, thus substantially making it possible to remotely control the operation of at least one or each of the aircraft apparatuses 100, 200 using said at least one control device of the system 1000. In particular, the control module in at least one or each of the aircraft apparatuses 100, 200 being part of the system 1000 may obtain a predetermined flight program received by the communication module of said aircraft apparatus from one of the control devices of the system 1000 and transmitted by said control device of the system 1000 to said aircraft apparatus via the communication network so as to enable movement of said aircraft apparatus through the air or in airspace in accordance with said flight program, wherein such flight program may comprise, for example, a flight of an aircraft apparatus 100 from a predetermined region of space to a predetermined (target) point of destination, during which flight there may be performed one or more operations of detachable docking in the air of the aircraft apparatus 100 to the aircraft apparatus 200, during each of which operations there may be performed an operation of mutual exchange of the guide and the payload between these docked aircraft apparatuses 100, 200.

The communication module being part of at least one or each of the aircraft apparatuses 100, 200 being part of the system 1000 may comprise at least one of the following means of wireless communication: an SW band radio antenna, USW radio antenna, UHF radio antenna, an optical communication module, half-duplex/simplex satellite communication module, 2G/3G/4G/LTE/5G cellular communication module, wireless communication module, wired communication module and the like, thus allowing said aircraft apparatus to receive navigation commands and/or control commands from one or more control devices of the system 1000 and, accordingly, allowing these control devices of the system 1000 to remotely control the operation of said aircraft apparatus.

At least one or each of the control devices of the system 1000 is configured to receive and process data (including system requests) from at least one or each of the aircraft apparatuses 100, 200 being part of the system 1000, and is also configured to generate control instructions/commands and/or to generate navigation instructions/commands based on said received data and the results of processing thereof so as to enable presenting or direction of such generated control and/or navigation commands to at least one or each of the aircraft apparatuses 100, 200 via a communication network (not shown).

The control module in each of the aircraft apparatuses 100, 200 being part of the system 1000, in turn, is configured to process navigation commands and/or control commands received by the communication module from one or more control devices of the system 1000, and is further configured to control the operation of said aircraft apparatus depending on said navigation commands and/or control commands. In particular, in response to navigation commands and/or control commands from one or more of the control devices of the system 1000, the control module of the aircraft apparatus 100 or of the aircraft apparatus 200 may, for example, enable performance of at least one of the following operations: (i) altering the speed of flight of the aircraft apparatus, (ii) altering the direction of flight of the aircraft apparatus, (iii) directing the aircraft apparatus from a parking station (not shown) or a current region of air space, through the air, to a target region of air space in which it is contemplated to dock said directed aircraft apparatus to at least one other aircraft apparatus of the system 1000; (iv) performing a detachable docking of the aircraft apparatus to at least one other aircraft apparatus of the system 1000; (v) performing an undocking of the aircraft apparatus from at least one other aircraft apparatus of the system 1000; (vi) directing the aircraft apparatus, through the air, to one of parking stations (not shown) for accommodating therein or thereon so as to enable storage of said aircraft apparatus in said parking station and/or so as to enable replenishment of the range (charging) of this aircraft apparatus; (vii) performing a transfer of the docking guide 300 or the payload 400 from the aircraft apparatus to the other aircraft apparatus of the system 1000 to which said aircraft apparatus is detachably docked; (viii) performing a receipt or accommodation of the docking guide 300 or the payload 400 on the aircraft apparatus from the other aircraft apparatus of the system 1000 to which said aircraft apparatus is detachably docked; and the like.

In some embodiments of the present invention, the control device (not shown) may as well not be part of the system 1000.

In some other embodiments of the present invention, the communication protocols and/or technical means used for communication between the one or more control devices of the system 1000 and the aircraft apparatuses 100, 200 being part of the system 1000 may be at least partially different from one another and/or may at least partially coincide with one another. Furthermore, for the communication of the aircraft apparatuses 100, 200 to one another and/or to the control devices of the system 1000, there may be simultaneously used one or more communication protocols and, accordingly, one or more technical means of communication.

In certain embodiments of the present invention, at least one or each of the control devices of the system 1000 may be configured to organize safety while flight or movement through the air of the aircraft apparatuses 100, 200, including of the cluster aircraft apparatuses formed each from two or more docked to one another aircraft apparatuses 100, two or more docked to one another aircraft apparatuses 200, and two or more docked to one another aircraft apparatuses 100, 200.

Of note, at least one or each of the control devices of the system 1000 may be configured in the form of a control server or control center. In particular, the system 1000 may comprise one control device configured to present control commands and/or navigation commands to the control module of at least one or each of the aircraft apparatuses 100, 200 being part of the system 1000, wherein such control device of the system 1000 may be a single server which may be configured in the form of, for example, the Dell PowerEdge^{™} server on which there may be used the Ubuntu Server or Windows Server operating system. Furthermore, the control device of the system 1000 may have or may acquire access to at least one external (remote) database (not shown) via the communication network (not shown) or otherwise or may comprise at least one local database stored on the storage device (not shown) being part of such control device or in the memory (not shown) of such control device.

In some embodiments of the present invention, the control device of the system 1000 may be any other suitable hardware, application software, system software or any combination thereof.

In other embodiments of the present invention, the functions of the control device of the system 1000 may be shared among multiple computer devices or computing devices, for example, may be implemented using multiple servers coupled to one another via the communication network so as to mutually exchange data therebetween.

In other embodiments of the present invention, the functions of the control device of the system 1000 may be performed by the control module of one of the aircraft apparatuses 100, 200 being part of the system 1000, by a predetermined group or combination of control modules of the aircraft apparatuses 100, 200 being part of the system 1000, by the control unit of the payload 400 or by any other suitable computing device being part of the system 1000 and configured to generate control commands and/or navigation commands and to present said generated commands to the control module of at least one or each of the aircraft apparatuses 100, 200 being part of the system 1000.

As shown in Figs. 1.1-1.4, the payload 400 being part of the system 1000 has a framework or housing 410 configured in the form of a cabin configured to accommodate therein passengers (for example, one or more persons and/or a pilot), a variety of living beings and/or a variety of cargos of any type. Of note, the payload 400 may be used to deliver, carry, transport or move people, a variety of living beings and organisms, vehicles, equipment, medicines and/or cargos of various types (solid, gaseous, liquid, fluid, bulk, viscous, radioactive, chemical cargos and/or the like) through the air, thus further allowing the payload to be referred to as a transporting module or transport module.

In one embodiment of the present invention, in the payload 400, in particular in the internal space of the housing 410, there may be installed a pilot seat which may accommodate a pilot (not shown) capable of controlling the means of transport, in the form of which the payload 400 may be implemented, using an instrument panel and control elements that may also be disposed in said housing 410. Furthermore, in this embodiment of the present invention, in the internal space of the housing 410, in addition to a pilot, there may be further accommodated at least one passenger, at least one luggage item of a passenger and/or at least one cargo item, wherein said pilot, passengers, cargo items and luggage items of passengers may be accommodated in respective spots in the common internal space or may be accommodated each in its distinct zone at least partially defined by one or more partitions or in a distinct compartment at least partially defined by one or more partitions.

In another embodiment of the present invention, the pilot seat may be disposed in the pilot cabin provided in the internal space of the housing 410 and separated by a partition from the remainder of the internal space of the housing 410 which, in turn, may be divided by another partition into a passenger compartment in which there may be installed one or more passenger seats for accommodating passengers therein and into a luggage compartment or cargo compartment in which there may be accommodated cargo (in particular, one or more cargo items) and/or there may be accommodated passenger luggage (in particular, one or more passenger luggage items), wherein said cargo items, passenger luggage items and/or passenger seats may be disposed on or attached to the bottom, floor, walls of the housing 410. In one of the variations of this embodiment of the present invention, the passenger compartment, instead of or further to passenger seats, may provide the following: (i) rails installed on the lateral walls, floor and/or ceiling of the housing 410 for accommodating passengers in any position in the housing 410, for example, sitting or standing on the floor of the housing 410; (ii) couches, beds or benches secured to the floor, walls and/or ceiling of the housing 410 for accommodating thereon passengers in a sitting, standing and/or lying position; (iii) specialized areas for accommodating disabled people in a sitting, standing and/or lying position; (iv) specialized areas for wheelchairs used by disabled people; (v) specialized areas for accommodating baby cots used by infants and (if necessary) specialized areas for accompanying persons; and/or (vi) specialized areas for accommodating gurneys for transporting patients used by bedridden patients. Of note, the quantity of passengers in the passenger compartment may be from one person to several tens or even hundreds of people without making any limitations, wherein said quantity of passengers is substantially limited only by the area of the passenger compartment within the internal space of the housing 410. In another variation of this embodiment of the present invention, in the cargo compartment of the housing 410 there may be enabled not only accommodation of cargo and/or passenger luggage on the floor but also attachment thereof in the cargo compartment of the housing 410 using conventional fastening means known in the prior art, wherein in the cargo compartment of the housing 410 there may be further provided shelves, hangers, crates and other carrying means attached to the floor, ceiling and/or lateral walls of the housing 410 and allowing additional cargo items and/or passenger luggage items to be accommodated in the cargo compartment of the housing 410. In another variation of this embodiment of the present invention, the areas for passenger luggage, including shelves, hangers, boxes, and other carrying means for accommodating passenger luggage items, may only be provided in the passenger compartment of the housing 410 further to the above variants of means for accommodating passengers in said passenger compartment. One skilled in the art would readily appreciate that cargo items and/or passenger luggage items may be at least partially secured or fixed also from the external side of the housing 410 of a payload using suitable fastening means known in the prior art (for example, using a dedicated enclosed-type attached equipment used in airplanes, cars, motorcycles, helicopters, bicycles and the like). Of note, the above pilot cabin, passenger compartment and cargo compartment in the housing 410 may be configured in general analogously to the respective compartments of airplanes, helicopters, buses, cars, ships, power boats and the like.

In yet another embodiment of the present invention, the pilot seat may be disposed in the pilot cabin in the internal space of the housing 410 which pilot cabin is separated by a partition from the remaining portion of the internal space of the housing 410 in which portion, in turn, on the bottom, ceiling and/or floor of the housing 410 there may be accommodated or secured passengers (for example, in passenger seats), cargo items and passenger luggage items. Furthermore, an embodiment of the present invention is possible in which in the internal space of the housing 410 there may be accommodated only a pilot and passengers; an embodiment of the present invention is possible in which in the internal space of the housing 410 there may be accommodated only a pilot and cargo; an embodiment of the present invention is possible in which in the internal space of the housing 410 there may be accommodated only passengers and cargo; an embodiment of the present invention is possible in which in the internal space of the housing 410 there may be accommodated only passengers; an embodiment of the present invention is possible in which in the internal space of the housing 410 there may be accommodated only a pilot in the pilot seat; and an embodiment of the present invention is possible in which in the internal space of the housing 410 there may be accommodated only cargo.

In some embodiments of the present invention, control elements in the payload 400, which control elements may be installed in the internal space of the housing 410, which internal space is defined by the walls of the housing 410 on the internal side thereof, substantially may allow to control the payload 200 in semi-automatic mode (i.e. a combination of manual control by a pilot and automatic control using autopilot) and may enable manual input, by the pilot present in the pilot seat and monitoring the readings of the instruments on the instrument panel, of at least one control command. The control elements of the housing 410 must be communicatively coupled to the below-described control unit (not shown), which may also be part of the payload 400, so as to enable each of said control commands of the pilot to be presented to said control unit of the payload 400, wherein some of said control commands of the pilot may substantially override the respective control commands of the control unit of the payload 400 generated by the control unit of the payload 400 while controlling the means of transport which is based on one or more docked to one another payloads 400 in automatic mode (i.e., in the autopilot mode). In one of the embodiments of the present invention, there may be not provided the participation of a pilot in the process of controlling the means of transport based on one or more docked to one another payloads 400 and, therefore, the above instrument panel, control elements and pilot seat may not be present in the internal space of the housing 410, and the control of such means of transport may be performed substantially fully in the automatic mode (i.e., in the autopilot mode) by using the below-described control unit of the payload 400 which module, in turn, may receive control commands from one or more control devices of the system 1000 which system comprises said payload 400. In another embodiment of the present invention, the above control elements and/or the above instrument panel in the housing 410 may be comprised in the control unit of the payload 400, thus allowing that control unit to simultaneously enable manual control of the means of transport based on one or more docked to one another payloads 400 by means of a pilot and automatic control of such means of transport in the autopilot mode.

Furthermore, as shown in Figs. 1.1-1.4, the housing 410 is provided with a docking module 420 configured to detachably couple or detachably dock the payload 400 to the housing 10 of any of the aircraft apparatuses 100, 200 being part of the system 1000 so as to enable movement of the payload 400 with respect to this housing 10, and to detachably couple or detachably dock the payload 400 to the docking guide 300 so as to enable movement of the payload 400 along this docking guide 300 in the case when this docking guide 300 is used to provide for the detachable docking of the aircraft apparatuses 100, 200 to one another.

Of note, the payload 400 detachably docked, by means of the docking module 420, to the housing 10 of any of the aircraft apparatuses 100, 200 being part of the system 1000 may be completely disposed exteriorly to this housing 10 or may be partially disposed in the internal space of this housing 10.

In one of the embodiments of the present invention, the payload 400 may be provided with one or more docking modules (for example, one, two, three, four, five, six, seven, eight, nine, ten or more docking modules) configured each in the form of the docking module 420, wherein said docking modules may be installed on the same side of the housing 410 or on different sides of the housing 410 (for example, on opposite or adjacent sides of the housing 410). In one variation of this embodiment of the present invention, at least one of the docking modules 420 which may be provided to the housing 410 may be installed interiorly to said housing 410 or may be partially embedded into said housing 410. In another variation of this embodiment of the present invention, at least one first docking module of the docking modules 420 which may be provided to the housing 410 may be installed interiorly to this housing 410, and at least one second docking module of said docking modules 420 may be installed on the external side of this housing 410.

In various embodiments of the present invention, the docking module 420 in the payload 400 shown in Figs. 1.1-1.4 may be configured in the form of one of the following connecting/fastening means or any suitable combination thereof: (i) a mechanical connecting or fastening element (e.g. a cam, bracket, grip, fastener, mounting groove, hook or hooklet, latch, clip, eye, clamp, etc.) for docking to respective mating mechanical elements (i.e. to a mating potion), (ii) an electromechanical grip being under the control of the control unit of the payload 400 for gripping the mating grippable element (i.e. the mating portion), (iii) an electromagnetic grip being under the control of the control unit of the payload 400 for gripping the mating grippable element (i.e. the mating portion), (iv) a vacuum grip being under the control of the control unit of the payload 400 for gripping the mating grippable element (i.e. the mating portion), and the like. Of note, in such embodiments of the present invention, the mating portion, which the docking module 420 may enter into detachable interaction with, may be installed in the housing 10 in at least one or each of the aircraft apparatuses 100, 200 being part of the system 1000, or on such housing 10, and/or may be installed on the docking guide 300. In one of the variations of such embodiments of the present invention, the mating portion, which the docking module 420 may enter into detachable interaction with, may be installed on each movable element or mechanism (for example, on a carriage), which may be movably installed on at least one or each of the aircraft apparatuses 100, 200 being part of the system 1000, and/or on the docking guide 300.

In other embodiments of the present invention, the docking module 420 may be an unmovable connecting/fastening means (including an unmovable connecting/fastening mechanism or an unmovable connecting/fastening structure) that may be configured to enter into a detachable interaction with a respective mating portion, wherein said unmovable fastening means may be rigidly or detachably secured onto the housing 410 on the external side thereof or may be partially embedded/integrated into this housing 410 so as to enable access to same from the external side of said housing 410. Of note, in such embodiments of the present invention, the mating portion, which the docking module 420, which is configured in the form of such unmovable fastening means, may enter in detachable interaction with, may be configured unmovable and may be installed in the housing 10 in at least one or each of the aircraft apparatuses 100, 200 being part of the system 1000, or on such housing 10, and/or may be installed on the docking guide 300. In one of the variations of such embodiments of the present invention, the mating portion, which the docking module 420, which is configured in the form of such unmovable fastening means, may enter into detachable interaction with, may be installed on each movable element or mechanism (for example, on a carriage), which may be movably installed on at least one or each of the aircraft apparatuses 100, 200 being part of the system 1000, and/or on the docking guide 300.

In other embodiments of the present invention, the docking module 420 may be a movable connecting/fastening means (including a movable connecting/fastening mechanism or a movable connecting/fastening structure) that may operate under the control of the control unit of the payload 400 (for example, a controlled carriage) or that may as well not operate under the control of the control unit of the payload 400 (for example, one or more travelling rollers or casters), wherein said fastening means may be configured to enter into a detachable interaction with a respective mating portion, wherein said movable fastening means may be rigidly or detachably secured onto the housing 410 on the external side thereof or may be partially embedded/integrated into this housing 410 so as to enable access to same from the external side of said housing 410. Of note, in such embodiments of the present invention, the mating portion, which the docking module 420, which is made in the form of such movable fastening means, may enter in detachable interaction with, must be configured unmovable and may be installed in the housing 10 in at least one or each of the aircraft apparatuses 100, 200 being part of the system 1000, or on such housing 10, and/or may be installed on the docking guide 300.

Furthermore, as shown in Figs. 1.1-1.4, the housing 10 in each of the aircraft apparatuses 100, 200 being part of the system 1000 is provided with a box-section functional beam 30 installed at least partially in the internal space of said housing 10 and having a longitudinal installation channel configured to receive at least one guide 300 from at least one or each of the two opposite ends thereof. In other words, the installation channel provided in the body of the functional beam 30 in each of the aircraft apparatuses 100, 200 being part of the system 1000 starts with a mounting hole providing communication of this installation channel with the external environment from one or both of the two opposite ends thereof, thus enabling the insertion of one or more guides 300 into said installation channel of said functional beam 30, as a result of which said guides 300 are completely located interiorly to this functional beam 30 or at least one of these guides with the greater portion thereof is located interiorly to this functional beam 30 and with the remaining portion it is located beyond the bounds of this functional beam. Alternatively, at least one or each of the functional beams 30 which are provided to the housings 10 in the aircraft apparatuses 100, 200 being part of the system 1000 may be secured or installed on the external side of the respective housing 10.

Furthermore, as shown in Figs. 1.1-1.4, the functional beams 30 which are provided to the housings 10 in the aircraft apparatuses 100, 200 being part of the system 1000 are configured or disposed/installed each so as to enable the payload 400 to enter into interaction with said functional beam 30 from the external side thereof using the respective docking module 420 and so as to enable movement of such payload 400 over the length of (along) said functional beam 30.

In particular, the docking module 420 being part of the payload 400 may comprise a controlled carriage (not shown) or a functional mechanism that performs the function of such carriage, wherein said carriage may be used for detachable installation of the payload 400 on any one of the functional beams 30, which are provided to the housings 10 in the aircraft apparatuses 100, 200 being part of the system 1000, so as to enable the movement of such carriage along said functional beam 30 from the external side thereof in the longitudinal direction and, consequently, enable the movement of the payload 400 itself with respect to the housing 10, which is provided with said functional beam 30 in general and with respect to said functional beam 30 in particular. Such controlled carriage (not shown) which may be provided to the docking module 420 in the payload 400 may also be used for the detachable installation of this payload 400 on any docking guide 300 being part of the system 1000 so as to enable the movement of such carriage along said docking guide 300 in the longitudinal direction and, consequently, enable the movement of said payload 400 with respect to said docking guide 300. Thus, such controlled carriage (not shown) which may be provided to the docking module 420 in the payload 400 substantially enables the movement of this payload along any of the functional beams 30 which are provided to the housings 10 in the aircraft apparatuses 100, 200 being part of the system 1000, and enables the movement of this payload along any docking guide 300, being part of the system 1000, depending on the stage of operation or of functioning of the system 1000 during which stage the system 1000 is present in one of the states described herein. Of note, such controlled carriage (not shown) may operate under the control of, for example, the control unit of the payload 400 or may transit to being controlled by the control module of the respective one of the aircraft apparatuses 100, 200, on which said payload 400 is detachably installed, such that the control unit of the payload 400 or the control module of said aircraft apparatus may be configured to present control commands to the controlled carriage so as to enable the altering of the operating mode thereof, in particular (i) setting the controlled carriage into action (into motion) so as to enable the movement thereof along the movement surface over a predetermined distance, (ii) stopping the movement or displacement of the controlled carriage so as to provide for placement thereof in a predetermined (target) location on the movement surface, (iii) altering the speed of movement of the controlled carriage along the movement surface, (iv) altering the direction of movement of the controlled carriage along the movement surface, and the like. In particular, such controlled carriage which may be provided with the docking module 420 in the payload 400 may be provided with a drive configured to enable the movement of the controlled carriage along the movement surface, and with a driver for controlling this drive configured to receive control commands from the control unit of the payload 400 or the control module of the aircraft apparatus, on which there is detachably installed said payload 400, so as to enable the execution of the control commands to alter the operating mode of this controlled carriage.

In one embodiment of the present invention, the controlled carriage (not shown) which may be provided to the docking module 420 in the payload 400 may be configured wheeled (i.e. may have a wheelbase) such that the surface of the external side of each of the functional beams 30 which are provided to the housings 10 in the aircraft apparatuses 100, 200 being part of the system 1000 substantially performs the function of a guide for said controlled carriage and is configured to enable the rectilinear movement of this controlled carriage along such guide under the control of the control module of the aircraft apparatus on which there is installed said functional beam 30.

In another embodiment of the present invention, the surface of the external side of each of the functional beams 30, which are provided to the housings 10 in the aircraft apparatuses 100, 200 being part of the system 1000, may be provided with one or more parallelly-arranged guide rails (for example, one, two, three or more such guide rails) extending along said functional beam along substantially the entire length thereof, thereby performing the function of a guide for the controlled carriage (not shown) which may be provided to the docking module 420 in the payload 400 installed on said functional beam 30, wherein said guide is configured to enable the rectilinear movement therealong of said controlled carriage under the control of the control module of the aircraft apparatus on which there is installed said functional beam 30.

As shown in Fig. 1.1 illustrating the first (original or initial) state of the system 1000, the docking guide 300 is completely placed or installed in the installation channel of the functional beam 30, which is provided to the housing 10 in the aircraft apparatus 100, so as to move therein in the longitudinal direction under the control of the control module of the aircraft apparatus 100 so as to (i) enable at least partial output or extension beyond said installation channel of the functional beam 30 to provide for detachable docking of this aircraft apparatus 100 to the aircraft apparatus 200 by means of said docking guide 300 or (ii) enable output or extension completely from said installation channel of the functional beam 30 and, consequently, exiting from interaction with the housing of the aircraft apparatus 100 for transferring this docking guide 300 to the aircraft apparatus 200 which is present simultaneously with the aircraft apparatus 100 in a predetermined region of airspace at a distance from this aircraft apparatus 100 and which has already transferred the payload 400 to the aircraft apparatus 100 by means of said docking guide 300 (see description below).

Furthermore, as shown in Fig. 1.1, simultaneously with the above-described aircraft apparatus 100, in a predetermined region of airspace at a predetermined distance from the aircraft apparatus 100, there is present an aircraft apparatus 200 whose housing 10 is provided with a payload 400 installed on a functional beam 30 so as to move therealong in the longitudinal direction under the control of the control module of the aircraft apparatus 200 so as to enable the withdrawal from interaction with said functional beam 30 with a transition to the docking guide 300 detachably coupling the aircraft apparatuses 100, 200 to one another for the subsequent transfer of this payload 400 to the aircraft apparatus by means of said docking guide 300. Thus, the functional beam 30, which is provided to the housing 10 in the aircraft apparatus 200, substantially performs the function of a guide for the aircraft apparatus 200.

In Fig. 1.2, the first system 1000 for moving a payload according to the first aspect of the present invention is present already in the second state thereof, to which it switched or to which it transitioned from the first state thereof described above with reference to Fig. 1.1. Of note, in the system 1000, which is present in the second state, the aircraft apparatuses 100, 200, which are part of the system 1000, are detachably coupled or docked to one another by means of a docking guide 300, wherein one of the two opposite ends of the docking guide 300 is located or remains in the installation channel of the functional beam 30 which is provided to the aircraft apparatus 100, and the other end of the docking guide 300 is introduced or inserted into the installation channel of the functional beam 30 which is provided to the aircraft apparatus 200. It should also be noted that in the system 1000 present in the second state, the payload 400 is still disposed or installed in a predetermined location on the functional beam 30, which is provided to the aircraft apparatus 200.

In particular, the aircraft apparatus 100 further comprises a guide movement module (not shown) which operates under the control of the control module of the aircraft apparatus 100 further configured to present control instructions to the driver of the drive, which is part of this guide movement module of the aircraft apparatus 100, and which is installed in/on the housing 10 thereof, wherein the guide movement module of the aircraft apparatus 100 is configured to interact with the docking guide 300 in accordance with a program-defined model of movement of the guide so as to provide for movement thereof or displacement thereof in the installation channel of the functional beam 30 which is provided to said housing 10. In particular, the movement or displacement of the docking guide 300 in the installation channel of the functional beam 30, which is provided to the housing 10 in the aircraft apparatus 100, as a result of the interaction of this docking guide 300 with the guide movement module of the aircraft apparatus 100 may enable a partial or complete extension of this docking guide 300 from the installation channel of the functional beam 30, which is provided to the housing 10 in the aircraft apparatus 100, beyond the bounds of this housing 10 such that as a result of the performance, by means of the guide movement module of the aircraft apparatus 100, of such extension operation under the control of the control module of the aircraft apparatus 100, said docking guide 300 may occur to be partially or substantially completely extended beyond said housing 10 or said docking guide 300 may partially or substantially completely exit from said housing 10 by a predetermined distance, which fact thereafter substantially allows for (i) in the case of partial extension of the docking guide 300 from the housing 10 in the aircraft apparatus 100, performing the docking of the aircraft apparatus 100 to the aircraft apparatus 200 by means of this docking guide 300 so as to enable the transfer of the payload 400 from the aircraft apparatus 200 to the aircraft apparatus 100 along said docking guide 300 detachably coupling the aircraft apparatuses 100, 200 to one another, and (ii) in the case of substantially complete extension of the docking guide 300 from the housing 10 in the aircraft apparatus 100 with withdrawal from interaction therewith, performing the transfer of said docking guide 300 from the aircraft apparatus 100 to the aircraft apparatus 200 (i.e. already after using this docking guide 300 for transferring the payload 400 from the aircraft apparatus 200 to the aircraft apparatus 100).

Furthermore, the movement or displacement of the docking guide 300 in the installation channel of the functional beam 30, which is provided to the housing 10 in the aircraft apparatus 100, as a result of the interaction thereof with the guide movement module of the aircraft apparatus 100 may enable partial or complete retraction thereof into the installation channel of the functional beam 30, which is provided to the housing 10 in this aircraft apparatus 100, as a result of which the previously extended docking guide 300 (in particular, extended from the housing 10 in the aircraft apparatus 100 or extended from the housing 10 in the aircraft apparatus 200) may occur to be partially or completely, respectively, located in said housing 10, in particular in the installation channel of the functional beam 30, which is provided to the housing 10 in the aircraft apparatus 100, or may be partially or completely, respectively, retracted/inserted into said housing 10, in particular into the installation channel of the functional beam 30, which is provided to the housing 10 in the aircraft apparatus 100. In other words, the guide movement module of the aircraft apparatus 100 may enable the return of the docking guide 300 partially or completely extended from the housing 10 in this aircraft apparatus 100, i.e., substantially provide for the return of this docking guide 300 to the initial or original state thereof, in which it is partially or completely accommodated interiorly to the housing 10 in the aircraft apparatus 100), which may be required, for example, in the case of the presence of obstacles (for example, unfavorable weather conditions in the form of strong wind) for the successful docking of the aircraft apparatus 100 to the aircraft apparatus or the presence of obstacles for the successful transfer of the payload 400 from the aircraft apparatus 200 to the aircraft apparatus 100 by means of said docking guide 300 detachably coupling the aircraft apparatuses 100, 200 to one another in the air. Furthermore, the guide movement module of the aircraft apparatus 100 may enable the partial insertion or partial advancement, towards the interior of the housing 10 in the aircraft apparatus 100, of the docking guide 300 partially extended from the housing of the aircraft apparatus 200 and introduced into detachable interaction with the housing of the aircraft apparatus 100, which thereafter substantially makes it possible to transfer the payload 400 along said docking guide 300, detachably coupling the aircraft apparatuses 100, 200 to one another, from the aircraft apparatus 100 to the aircraft apparatus 200. Furthermore, the guide movement module of the aircraft apparatus 100 may enable complete insertion or advancement completely, towards the interior of the housing 10 in the aircraft apparatus 100, of the docking guide 300 introduced into detachable interaction with the housing of the aircraft apparatus 100 and completely extended from the housing of the aircraft apparatus 200 with a withdrawal from interaction therewith (i.e. already after using this docking guide 300 for transferring the payload 400 from the aircraft apparatus 100 to the aircraft apparatus 200), thus thereafter substantially allowing for the transfer of said docking guide from the aircraft apparatus 200 to the aircraft apparatus 100.

In one embodiment of the present invention, the guide movement module (not shown), which may be provided to the housing 10 in the aircraft apparatus 100, may be configured to simultaneously or sequentially interact with at least one or each of the docking guides 300, which may be provided to the housing 10 in the aircraft apparatus 100 or which may enter into detachable interaction with this housing 10, under the control of the control module of the aircraft apparatus 100 so as to enable the movement or displacement thereof with respect to said housing 10, in particular to enable the movement or advancement thereof in the same installation channel of the functional beam 30, which may be provided to the housing 10 in the aircraft apparatus 100, in the corresponding (different) installation channels provided in the same functional beam 30, which may be provided to the housing 10 in the aircraft apparatus 100, or in the corresponding (different) installation channels each of which is provided in a corresponding one of the functional beams 30, which may be provided to the housing 10 in the aircraft apparatus 100.

The aircraft apparatus 200, in turn, also further comprises a guide movement module (not shown) which operates under the control of the control module of the aircraft apparatus 200 further configured to present control instructions to the driver of the drive, which is part of this guide movement module of the aircraft apparatus 200, and which is installed in/on the housing 10 thereof, wherein the guide movement module of the aircraft apparatus 200 is configured to interact with the docking guide 300 in accordance with a program-defined model of movement of the guide so as to provide for movement thereof or displacement thereof in the installation channel of the functional beam 30 which is provided to said housing 10.

In particular, the movement or displacement of the docking guide 300 in the installation channel of the functional beam 30, which is provided to the housing 10 in the aircraft apparatus 200, as a result of the interaction thereof with the guide movement module of the aircraft apparatus 200 may enable partial or complete retraction thereof into the installation channel of the functional beam 30, which is provided to the housing 10 in this aircraft apparatus 200, as a result of which the previously extended docking guide 300 (in particular, extended from the housing 10 in the aircraft apparatus 100 or extended from the housing 10 in the aircraft apparatus 200) may occur to be partially or completely, respectively, located in said housing 10, in particular in the installation channel of the functional beam 30, which is provided to the housing 10 in the aircraft apparatus 200, or may be partially or completely, respectively, retracted/inserted into said housing 10, in particular into the installation channel of the functional beam 30, which is provided to the housing 10 in the aircraft apparatus 200. In other words, the guide movement module of the aircraft apparatus 200 may enable the partial insertion or partial advancement, towards the interior of the housing 10 in the aircraft apparatus 200, of the docking guide 300 partially extended from the housing of the aircraft apparatus 100 and introduced into detachable interaction with the housing of the aircraft apparatus 200, which thereafter substantially makes it possible to transfer the payload 400 from the aircraft apparatus 100 to the aircraft apparatus 200 along said docking guide 300, detachably coupling the aircraft apparatuses 100, 200 to one another. Furthermore, the guide movement module of the aircraft apparatus 200 may enable complete insertion or advancement completely, towards the interior of the housing 10 in the aircraft apparatus 200, of the docking guide 300 introduced into detachable interaction with the housing of the aircraft apparatus 200 and completely extended from the housing of the aircraft apparatus 100 with a withdrawal from interaction therewith (i.e. already after using this docking guide 300 for transferring the payload 400 from the aircraft apparatus 200 to the aircraft apparatus 100), thus substantially allowing for the transfer of said docking guide 300 from the aircraft apparatus 100 to the aircraft apparatus 200. Furthermore, the guide movement module of the aircraft apparatus 100 may enable the return of the docking guide 300 partially or completely extended from the housing 10 in this aircraft apparatus 200, i.e., may substantially provide for the return of this docking guide 300 to the initial or original state thereof, in which it is partially or completely accommodated interiorly to the housing 10 in the aircraft apparatus 200), which may be required, for example, in the case of the presence of obstacles (for example, unfavorable weather conditions in the form of strong wind) for the successful docking of the aircraft apparatus 200 to the aircraft apparatus 100 or the presence of obstacles for the successful transfer of the payload 400 from the aircraft apparatus 100 to the aircraft apparatus 200 by means of said docking guide 300 detachably coupling the aircraft apparatuses 100, 200 to one another in the air.

Furthermore, the movement or displacement of the docking guide 300 in the installation channel of the functional beam 30, which is provided to the housing 10 in the aircraft apparatus 200, as a result of the interaction of this docking guide 300 with the guide movement module of the aircraft apparatus 200 may enable a partial or complete extension of this docking guide 300 from the installation channel of the functional beam 30, which is provided to the housing 10 in the aircraft apparatus 200, beyond the bounds of this housing 10 such that as a result of the performance, by means of the guide movement module of the aircraft apparatus 200, of such extension operation under the control of the control module of the aircraft apparatus 200, said docking guide 300 may occur to be partially or substantially completely extended beyond said housing 10 or said docking guide 300 may partially or substantially completely exit from said housing 10 by a predetermined distance, which fact thereafter substantially allows for (i) in the case of partial extension of the docking guide 300 from the housing 10 in the aircraft apparatus 200, performing the docking of the aircraft apparatus 200 to the aircraft apparatus 100 by means of this docking guide 300 so as to enable the transfer of the payload 400 from the aircraft apparatus 100 to the aircraft apparatus 200 along said docking guide 300 detachably coupling the aircraft apparatuses 100, 200 to one another, and (ii) in the case of substantially complete extension of the docking guide 300 from the housing 10 in the aircraft apparatus 200 with withdrawal from interaction therewith, performing the transfer of said docking guide 300 from the aircraft apparatus 200 to the aircraft apparatus 100 (i.e. already after using this docking guide 300 for transferring the payload 400 from the aircraft apparatus 100 to the aircraft apparatus 200).

In one embodiment of the present invention, the guide movement module (not shown), which may be provided to the housing 10 in the aircraft apparatus 200, may be configured to simultaneously or sequentially interact with at least one or each of the docking guides 300, which may be provided to said housing 10 or which may enter into detachable interaction with this housing, under the control of the control module of the aircraft apparatus 200 so as to enable the movement or displacement thereof with respect to said housing 10, in particular to enable the movement or advancement thereof in the same installation channel of the functional beam 30, which may be provided to the housing 10 in the aircraft apparatus 200, in the corresponding (different) installation channels provided in the same functional beam 30, which may be provided to the housing 10 in the aircraft apparatus 200, or in the corresponding (different) installation channels each of which is provided in a corresponding one of the functional beams 30, which may be provided to the housing 10 in the aircraft apparatus 200.

The aircraft apparatus 200 also further comprises a controlled docking module for docking to a guide (not shown), said controlled docking module operating under the control of the control module of the aircraft apparatus 200, further configured to present the control instructions to the driver of the drive being part of this docking module of the aircraft apparatus 200, and being installed in/on the housing 10 thereof, wherein the docking module of the aircraft apparatus 200 is configured to interact with the docking guide 300 in accordance with a program-defined model of interaction with the guide so as to enable the alignment (centering) thereof with respect to the entrance opening of the installation channel of the functional beam 30, which is provided to the housing 10 in the aircraft apparatus 200, and to enable the partial insertion thereof with a free end into said installation channel of the functional beam 30 by a predetermined distance sufficient to provide for a detachable coupling or detachable docking of the aircraft apparatuses 100, 200 to one another. Furthermore, the docking module of the aircraft apparatus 200 is further configured to interact with the docking guide 300 so as to enable holding or fixing same in said installation channel of the functional beam 30 in one of the following states: (i) a state in which said docking guide 300 is partially inserted or retracted into this installation channel of the functional beam 30 while using this docking guide 300 for detachably docking the aircraft apparatus 100 to the aircraft apparatus 200 so as to enable the transfer of the payload 400 along said docking guide 300 from the aircraft apparatus 200 to the aircraft apparatus 100, thus eliminating the possibility of unintentional undocking of the docking guide 300 from the aircraft apparatus 200, in particular while the movement of the payload 400 therealong from the aircraft apparatus 200 to the aircraft apparatus 100, (ii) a state in which said docking guide 300 is partially extended from or is partially beyond the bounds of this installation channel of the functional beam 30 while using this docking guide 300 for detachably docking the aircraft apparatus 200 to the aircraft apparatus 100 so as to enable the transfer of the payload 400 along said docking guide 300 from the aircraft apparatus 100 to the aircraft apparatus 200, thus eliminating the possibility of unintentional undocking of the docking guide 300 from the aircraft apparatus 200, in particular while the movement of the payload 400 therealong from the aircraft apparatus 100 to the aircraft apparatus 200, and (iii) a state in which said docking guide 300 is completely or substantially completely inserted or retracted into this installation channel of the functional beam 30 while the transportation of this docking guide 300 on the aircraft apparatus 200 to a target region of airspace, for example, to perform a detachable coupling or a detachable docking to the aircraft apparatus 100, thus eliminating the possibility of unintentional falling out of the docking guide 300 from the installation channel of the functional beam 30, which is provided to the housing 10 in the aircraft apparatus 200.

The aircraft apparatus 100, in turn, also further comprises a controlled docking module for docking to a guide (not shown), said controlled docking module operating under the control of the control module of the aircraft apparatus 100, further configured to present the control instructions to the driver of the drive being part of this docking module of the aircraft apparatus 100, and being installed in/on the housing 10 thereof, wherein the docking module of the aircraft apparatus 100 is configured to interact with the docking guide 300 so as to enable holding or fixing same in the installation channel of the functional beam 30, which is provided to the housing 10 in the aircraft apparatus 100, (iii) a state in which this docking guide 300 is partially extended from or is partially beyond the bounds of this installation channel of the functional beam 30 while using this docking guide 300 for detachably docking the aircraft apparatus 100 to the aircraft apparatus 200 so as to enable the transfer of the payload 400 along said docking guide 300 from the aircraft apparatus 200 to the aircraft apparatus 100, thus eliminating the possibility of unintentional undocking of the docking guide 300 from the aircraft apparatus 100, in particular while the movement of the payload 400 therealong from the aircraft apparatus 200 to the aircraft apparatus 100. Furthermore, the docking module of the aircraft apparatus 100 is further configured to interact with the docking guide 300 so as to enable holding or fixing same in the installation channel of the functional beam 30, which is provided to the housing 10 in the aircraft apparatus 100, in a state in which this docking guide 300 is partially inserted or retracted into this installation channel of the functional beam 30 while using this docking guide 300 for detachable docking of the aircraft apparatus 200 to the aircraft apparatus 100 so as to enable the transfer of the payload 400 along said docking guide 300 from the aircraft apparatus 100 to the aircraft apparatus 200, thus eliminating the possibility of unintentional undocking of the docking guide 300 from the aircraft apparatus 100, especially while the movement of the payload 400 therealong from the aircraft apparatus 100 to the aircraft apparatus 200. Furthermore, the docking module of the aircraft apparatus 100 is further configured to interact with the docking guide 300 so as to enable holding or fixing same in the installation channel of the functional beam 30, which is provided to the housing 10 in the aircraft apparatus 100, in a state in which this docking guide 300 is completely or substantially completely inserted or retracted into this installation channel of the functional beam 30 while the transportation of this docking guide 300 on the aircraft apparatus 100 to a target region of airspace, for example to perform a detachable coupling or a detachable docking to the aircraft apparatus 200, thus eliminating the possibility of unintentional falling out of the docking guide 300 from the installation channel of the functional beam 30, which is provided to the housing 10 in the aircraft apparatus 100. Furthermore, the docking module of the aircraft apparatus 100 is further configured to interact with the docking guide 300 in accordance with a program-defined model of interaction with the guide so as to enable the alignment (centering) thereof with respect to the entrance opening of the installation channel of the functional beam 30, which is provided to the housing 10 in the aircraft apparatus 100, and to enable the partial insertion thereof with a free end into said installation channel of the functional beam 30 by a predetermined distance sufficient to provide for a detachable coupling or detachable docking of the aircraft apparatuses 100, 200 to one another.

Of note, the docking module for docking to a guide, which may be provided to the housings 10 in each of the aircraft apparatuses 100, 200 being part of the system 1000, may also be referred to as a module of docking and may be configured, for example, in the form of a gripping mechanism provided with compression actuated by a drive whose driver (control unit) may receive control commands from the control module of said aircraft apparatus or from any control device of the system 1000. Thus, the driver (control unit), which is part of each of such docking modules for docking to a guide, which docking module may be provided to the housing 10 in the corresponding one of the aircraft apparatuses 100, 200, may be configured to receive control commands from the control module of said aircraft apparatus or from any control device of the system 1000 so as to enable the control of the operation of said docking module, specifically of the drive thereof, on the basis of said received control commands. In particular, each such docking module in the form of a gripping mechanism may be configured to enter into interaction with the docking guide 300 by way of clamping or gripping same from two opposite sides by means of compression plates so as to enable this docking guide 300 to move between said compression plates or to enable the pinching or compressing of this docking guide 300 for fixing same or holding same in an unmovable state, in which state it is partially or completely accommodated in the installation channel of the functional beam 30 which the housing 10 may be provided with in any one of the aircraft apparatuses 100, 200 being part of the system 1000.

Thus, while the transition of the system 1000 from the first state thereof shown in Fig. 1.1 to the second state thereof shown in Fig. 1.2, the guide movement module of the aircraft apparatus 100, under the control of the control module of the aircraft apparatus 100, enters into interaction with the docking guide 300 disposed in the installation channel of the functional beam 30, which is provided to the housing 10 in the aircraft apparatus 100, for moving same or advancing same in said installation channel of the functional beam 30 so as to enable the partial extension of this docking guide 300 from said housing 10 in the outward direction (in particular, towards the second aircraft apparatus 200 present with the aircraft apparatus 100 in the same region of airspace, and preferably opposite the latter) by a predetermined distance which distance is sufficient for the introduction of the free end of the extended docking guide 300 into detachable interaction with the aircraft apparatus 200, specifically with the housing 10 thereof, and which distance excludes the possibility of mutual damaging effects of the bladed air propulsion units 20, which are provided to the housings 10 in these aircraft apparatuses 100, 200. After partial extension of the docking guide 300 from the housing of the aircraft apparatus 100 using the guide movement module of the aircraft apparatus 100, the docking module for docking to the guide, which is part of this aircraft apparatus 100, enters into interaction with said partially extended docking guide 300 so as to fix same in this state. Subsequently, it is now the docking module for docking to the guide, which docking module is part of the aircraft apparatus 200, that enters into interaction with the free end of the partially extended docking guide 300 so as to align (center) said docking guide 300 with respect to the entrance opening of the installation channel of the functional beam 30, which is provided to the housing 10 in the aircraft apparatus 200, and so as to partially (limitedly) insert this docking guide 300 with the free end thereof into said installation channel of the functional beam 30 so as to enable said inserted end of the docking guide 300 to enter into interaction with the guide movement module, which is provided to the housing 10 in the aircraft apparatus 200. Upon entering into interaction with the docking guide 300, the guide movement module of the aircraft apparatus 200, in turn, presents a signal, indicating the entry of the guide movement module of the aircraft apparatus 200 into interaction with the docking guide 300, to the control module of the aircraft apparatus 200, which control module substantially simultaneously presents the signal to the docking module of the aircraft apparatus 200 and to the docking module of the aircraft apparatus 100 (for example, using the control device of the system 1000, to which control device the control module of the aircraft apparatus 200 may present said signal and which control device, in turn, may transmit said received signal to the control module of the aircraft apparatus 100, and using the control module of the aircraft apparatus 100, which control module may present the signal received by this control module from the control device of the system 1000 to the docking module of the aircraft apparatus 100) so as to enable at least a temporary withdrawal of the docking module of the aircraft apparatus 100 and the docking module of the aircraft apparatus 200 from interaction with the docking guide 300 for moving or advancing same, by means of the guide movement module of the aircraft apparatus 200, towards the interior of the installation channel of the functional beam 30, which is provided to the housing 10 in the aircraft apparatus 200, by a predetermined distance which may be controlled, for example, by an infrared sensor installed in a predetermined spot in said installation channel of the functional beam. After placing the free end of the docking beam 300 in the appropriate spot in the installation channel of the functional beam 30, which is provided to the housing 10 in the aircraft apparatus 200, the guide movement module of the aircraft apparatus 200, in an analogous manner, substantially simultaneously presents a control signal, by means of the control module of the aircraft apparatus 200, to the docking module of the aircraft apparatus 200 and to the docking module of the aircraft apparatus 100 for fixing the opposite ends of the docking guide 300 in the corresponding installation channels of the functional beams 30, with which the housings 10 in the aircraft apparatuses 100, 200 are provided, thus substantially providing for a detachable coupling or detachable docking of the aircraft apparatuses 100, 200 to one another.

In other words, as a result of the transition of the system 1000 from the first state thereof, shown in Fig. 1.1, to the second state thereof, shown in Fig. 1.2, the aircraft apparatuses 100, 200 are detachably docked to one another by means of the docking guide 300 whose opposite ends are fixed in the aircraft apparatuses 100, 200 by means of the docking modules thereof.

In some embodiments of the present invention, the docking guide 300 may be provided with a controllable docking module or docking mechanism (not shown) secured or installed on at least one or each of the two opposite ends of the docking guide 300 and operably coupled to the control module of the docking guide 300 so as to enable the control of the operation of these docking mechanisms of the docking guide 300, and configured to enter into detachable interaction with the housing 10 in any one of the aircraft apparatuses 100, 200 or with the above docking module of any of the aircraft apparatuses 100, 200, thus enabling the detachable connecting of said docking guide 300 to the housing of the aircraft apparatus 200 so as to provide for the docking of the aircraft apparatus 100 to the aircraft apparatus 200, or enabling the detachable connecting of said docking guide 300 to the housing of the aircraft apparatus 100 so as to provide for the docking of the aircraft apparatus 200 to the aircraft apparatus 100. In one variation of this embodiment of the present invention, at least one or each of the docking guides 300 which may be used to detachably couple the aircraft apparatuses 100, 200 to one another may be provided with such docking mechanism at least at one or each of the two opposite ends of said docking guide 300.

While the transition of the system 1000 from the second state thereof as shown in Fig. 1.2 to the third state thereof as shown in Fig. 1.3, the control module of the aircraft apparatus 200, after completion of the process of detachable docking of the aircraft apparatus 100 to the aircraft apparatus 200 by means of the docking guide 300 detachably coupling these aircraft apparatuses 100, 200 to one another presents a control signal to the carriage of the docking module 420, which is part of the payload 400 installed on the functional beam 30 in the aircraft apparatus 200, so as to enable the actuation thereof for moving said carriage of the docking module 420 together with the payload 400 towards the first aircraft apparatus 100 or towards the docking guide 300 detachably coupling the aircraft apparatuses 100, 200 to one another. Upon the approaching of the carriage of the docking module 420 to the end of the functional beam 30, on the side of which end the docking guide 300 is inserted into the installation channel of the functional beam 30, the carriage of the docking module 420 together with the payload 400 transitions from the external surface of movement of said functional beam 30 to said docking guide 300 so as to enable the movement thereof along said docking guide 300 towards the aircraft apparatus 100 and, consequently, to provide for the movement of the payload in the air with respect to said docking guide 300 towards the aircraft apparatus 100. Thus, as a result of the transition of the system 1000 from the second state thereof as shown in Fig. 1.2 to the third state thereof as shown in Fig. 1.3, there takes place a transition, by means of the carriage of the docking module 420, of the payload 400 to the docking guide 300 detachably coupling the aircraft apparatuses 100, 200 to one another such that said payload 400 occurs to be placed or installed, by means of said carriage of the docking module 420, on said docking guide 300 so as to move therealong in the longitudinal direction, in particular towards the aircraft apparatus 100. Of note, while the transition of the system 1000 from the second state thereof shown in Fig. 1.2 to the third state thereof shown in Fig. 1.3, and while the presence of the system 1000 in said third state, in which the payload 400 occurs to be movably placed on the docking guide 300, the docking module of the aircraft apparatus 200 and the docking module of the aircraft apparatus 100 still provide for the fixation of the opposite ends of this docking guide 300 in the corresponding installation channels of the functional beams 30, which are provided to the housings 10 in these aircraft apparatuses 100, 200, such that the docking guide 300 is substantially rigidly secured between these aircraft apparatuses 100, 200 so as not to displace or move towards any of these aircraft apparatuses 100, 200.

In one embodiment of the present invention, wherein the aircraft apparatus 100 may be detachably docked to an aircraft apparatus by means of two or more docking guides 300, the payload 400 may be installed on the aircraft apparatus 200 so as to move, by means of the carriage of the docking module 420, along the functional beam 30, which is provided to the housing 10 in the aircraft apparatus 200, with respect to the housing of the aircraft apparatus 200 so as to enable the transition to at least one of said docking guides 300 detachably coupling the aircraft apparatuses 100, 200 to one another for placing this payload 400 on said docking guide 300 so as to enable the longitudinal movement thereof along this docking guide 300.

While the transition of the system 1000 from the third state thereof as shown in Fig. 1.3 to the fourth state thereof as shown in Fig. 1.4, the carriage of the docking module 420 which carriage receives control signals from the control module of the aircraft apparatus 200 or the control device of the system 1000 continues to move together with the payload 400 along the docking guide 300 detachably coupling the aircraft apparatuses 100, 200 to one another towards the aircraft apparatus 100, wherein, as the carriage of the docking module 420 approaches the aircraft apparatus 100, this carriage of the docking module 420 transitions together with the payload 400 from said docking guide 300 to the functional beam 30, which is provided to the housing 10 in the aircraft apparatus 100 and which substantially performs the function of a guide for the aircraft apparatus 100, so as to enable the movement, by means of said carriage of the docking module 420, along said functional beam 30 until the payload 400 is placed on the aircraft apparatus 100 in a predetermined location with respect to the housing 10 thereof or with respect to this functional beam 30. Of note, the location on the functional beam 30, which is provided to the housing 10 in the aircraft apparatus 100, for stopping thereat the carriage of the docking module 420 so as to provide for the placement of the payload 400 in a predetermined spatial position in the air with respect to said housing 10 may be controlled, for example, by an infrared sensor disposed on the movement surface of said functional beam 30 in a spot or on a section generally corresponding to said location for stopping of the carriage of the docking module 420, and operably coupled to the control module of the aircraft apparatus 100 so as to mutually communicate. After the stopping of the carriage of the docking module 420 at a predetermined location on the functional beam 30, which is provided to the housing 10 in the aircraft apparatus 100, so as to provide for the placement of the payload 400 in a predetermined spatial position in the air with respect to said housing 10, the driver (control unit) of the carriage of the docking module 420 presents an information signal to the control module of the aircraft apparatus 100 or the control device of the system 1000, said information signal indicating the completion of the process of installing the payload 400 on the aircraft apparatus 100, for transmitting (retransmitting) same substantially simultaneously to the docking module of the aircraft apparatus 200 and to the docking module of the aircraft apparatus 100 so as to provide for the withdrawal of the aircraft apparatuses from interaction with the docking guide 300 for releasing this docking guide 300, thus substantially enabling movement or transfer of said released docking guide 300 to the aircraft apparatus 200. Furthermore, after the release of the docking guide 300, the driver (control unit) of the docking module of the aircraft apparatus 100 and the driver (control unit) of the docking module of the aircraft apparatus 200 each present corresponding information signals indicating the completion of the process of releasing the docking guide 300 to the control module of the aircraft apparatus 100 and the control module of the aircraft apparatus 200, respectively, which in turn transmit said information signals to the control device of the system 100, in response to which signals the control device of the system 100 generates control commands so as to provide for presenting same via the communication network (not shown) to the guide movement module of the aircraft apparatus 200 for actuating same. The actuated guide movement module of the aircraft apparatus 200 enters into interaction with the docking guide 300 already released from interaction with the docking modules of the aircraft apparatuses 100, 200 so as to provide for movement or retraction thereof into the installation channel of the functional beam 30, which is provided to the housing 10 in the aircraft apparatus 200. While the retraction of the docking guide 300 into the installation channel of the functional beam 30, which is provided to the housing 10 in the aircraft apparatus 200, this retractable docking guide 300 comes out of the installation channel of the functional beam 30, which is provided to the housing 10 in the aircraft apparatus 100, so as to provide for the withdrawal from interaction with said housing 10 of this aircraft apparatus 100, followed by the placement completely in the installation channel of the functional beam 30, which is provided to the housing 10 in the aircraft apparatus 200. Of note, the placement of the retractable docking guide 300 completely in the installation channel of the functional beam 30, which is provided to the housing 10 in the aircraft apparatus 200, may also be controlled by an infrared sensor disposed interiorly to said installation channel of the functional beam 30 in a spot or on a section generally corresponding to the end portion of this installation channel of the functional beam 30, the length from which portion to the opposite end of this installation channel of the functional beam 30 generally corresponds to the length of said docking guide 300, and operably coupled to the control module of the aircraft apparatus 200 so as to mutually communicate such that the control module of the aircraft apparatus 200 may receive an information signal from said infrared sensor indicating that the docking guide 300, which is being retracted into said installation channel of the functional beam 30 by the guide movement module of the aircraft apparatus 200, has reached said end portion of this installation channel of the functional beam 30, that is, a predetermined location in the installation channel of the functional beam 30, which corresponds to the placement of this docking guide 300 completely within said installation channel of the functional beam 30, and can, in response to said information signal, generate a first control command presented to said guide movement module of the aircraft apparatus 200 to stop same so as to provide for the stopping of the advancement of the retractable docking guide 300 so it occupies the desired (target) location within the installation channel of the functional beam 30, and a second control command presented to the docking module of the aircraft apparatus 200 so as to provide for the fixation of said docking guide 300 in said target location on the aircraft apparatus 200.

Thus, in the system 1000, which is present in the fourth state thereof as shown in Fig. 1.4, the payload 400 occurs to be placed or installed, by means of the carriage of the docking module 420, on the functional beam 30, which is provided to the housing 10 in the aircraft apparatus 100, in a fixed location, and the docking guide 300, used for moving or transferring therealong said payload 400 from the aircraft apparatus 200 to the aircraft apparatus 100, occurs to be placed or installed in the installation channel of the functional beam 30, which is provided to the housing 10 in the aircraft apparatus 200 (i.e. in the housing 10 of this aircraft apparatus 200). In other words, the fourth state of the system 1000 as shown in Fig. 1.4 corresponds to the completion of the process of exchanging, by the aircraft apparatus 200, the payload 400 thereof for the docking guide 300 moved or transferred from the aircraft apparatus 100 to the aircraft apparatus 200 after the payload 400 has been moved therealong from the aircraft apparatus 200 to the aircraft apparatus 100, and of exchanging, by the aircraft apparatus 100, the docking guide 300 thereof, employed for the detachable coupling to one another of these aircraft apparatuses 100, 200 so as to provide for the transfer/movement therealong of said payload 400 from the aircraft apparatus 200 to the aircraft apparatus 100, for said payload 400.

Of note, while the transition of the system 1000 from the third state thereof as shown in Fig. 1.3 to the fourth state thereof as shown in Fig. 1.4, in particular until the moment of the release of the docking guide 300 detachably coupling to one another the aircraft apparatuses 100, 200, the docking module of the aircraft apparatus 200 and the docking module of the aircraft apparatus 100 continue to provide for the fixation of the opposite ends of this docking guide 300 in the corresponding installation channels of the functional beams 30, which are provided to the housings 10 in these aircraft apparatuses 100, 200, such that the docking guide 300 substantially remains rigidly fixed between these aircraft apparatus 100, 200 so as not to displace or move towards any of these aircraft apparatuses 100, 200.

Of note, the above-described functional operations which are carried out using the above-described functional components and modules being part of the aircraft apparatus 100, 200 for enabling the transfer of the payload 400 from the aircraft apparatus 200 to the aircraft apparatus 100 along the docking guide 300 detachably coupling these aircraft apparatuses 100, 200 to one another and which illustrate the sequential transition of the system 1000 from the initial (first) state thereof as shown in Fig. 1.1 to the final (fourth) state thereof as shown in Fig. 1.4 may be carried out in the reverse order to enable the transfer of the payload 400 from the aircraft apparatus 100 to the aircraft apparatus 200 along the docking guide 300 detachably coupling these aircraft apparatuses 100, 200 to one another. It should also be noted that the aircraft apparatuses 100, 200 being part of the system 100 have substantially identical design features and functional features; therefore, one skilled in the art will appreciate that the payload may be initially installed on the aircraft apparatus 100 instead of the aircraft apparatus 200, and the docking guide 300 may be initially installed on the aircraft apparatus 200 instead of the aircraft apparatus 100; further, distinct reference numbers are introduced solely to simplify the understanding of the process of interaction of such aircraft apparatuses 100, 200 with one another for the exchange of the payload 400 for the docking guide 300 directly in the air. In some embodiments of the present invention, the system 1000 may include aircraft apparatuses 100 provided each with a payload 400, aircraft apparatuses 100 provided each with a docking guide 300, aircraft apparatuses 200 provided each with a payload 400, and aircraft apparatuses 200 provided each with a docking guide 300.

In another embodiment of the present invention, the housing 10 in the aircraft apparatus 200 may be further provided with a payload movement module (not shown) operating under the control of the control module of the aircraft apparatus 200, which may receive control commands from the control device of the system 1000, or under the control of the control unit of the payload 400, which may receive control commands from the control module of the aircraft apparatus 200 or from the control device of the system 1000. In such an embodiment of the present invention, the payload movement module of the aircraft apparatus 200 may be configured to interact with the payload 400 located or installed on at least one of the docking guides 300 detachably coupling the aircraft apparatuses 100, 200 so as to enable the movement of said payload 400 along said at least one docking guide 300 towards the aircraft apparatus 100 so as to enable the placement thereof on this aircraft apparatus 100 or enable the transfer thereof to this aircraft apparatus 100. In one of the variations of this embodiment of the present invention, the payload movement module, which may be further provided to the housing 10 in the aircraft apparatus 200, may be a robotic manipulator or grip operating under the control of the control module of the aircraft apparatus 100 or under the control of the control device of the system 1000 and configured to grip the payload 400 located on at least one of the docking guides 300 detachably coupling the aircraft apparatuses 100, 200 so as to enable the movement of the gripped payload 400 along said at least one docking guide 300 onto the aircraft apparatus 100 for placing this payload 400 on the aircraft apparatus 100. In another variation of this embodiment of the present invention, the payload movement module, which may be further provided to the housing 10 in the aircraft apparatus 200, may be a pusher configured, when actuated, to act upon the payload 400, located on at least one of the docking guides 300 detachably coupling the aircraft apparatuses 100, 200, so as to enable the movement of this payload 400 along said at least one docking guide 300 to the aircraft apparatus 100, wherein the aircraft apparatus 200 may be further provided with a drive device (not shown) operating under the control of the control module of the aircraft apparatus 200 or the control device of the system 1000 and operably coupled to said pusher so as to enable the control of operation thereof, in particular to enable the actuation of this pusher of the aircraft apparatus 200.

In another embodiment of the present invention, the housing 10 in the aircraft apparatus 200 may be further provided with a robotic manipulator or grip operating under the control of the control module of the aircraft apparatus 200 or under the control of the control device of the system 1000 and configured to grip the payload 400 so as to enable the placement of the gripped payload 400 on at least one of the docking guides 300 detachably coupling the aircraft apparatuses 100, 200 to one another. In one of the variations of this embodiment of the present invention, the robotic manipulator or grip, which may be further provided to the housing 10 in the aircraft apparatus 200, may be further configured to enable the movement or transfer of the gripped payload 400 along at least one of the docking guides 300, detachably coupling the aircraft apparatuses 100, 200 to one another, to the aircraft apparatus 100. In another variation of this embodiment of the present invention, at least one of the docking guides 300 detachably coupling the aircraft apparatuses 100, 200 may be further provided with a driven carriage (not shown), and the robotic manipulator or grip of the aircraft apparatus 200 may be further configured to enable the detachable placement of the gripped payload 400 on said carriage or to enable detachable docking of the gripped payload 400 to said carriage, and the driven carriage itself may be configured to move along said at least one docking guide 300 under the control of the control device of the system 1000 or the driver (control unit) of the carriage, which receives control commands from the control device of the system 1000 or the control module of any of the aircraft apparatuses 100, 200, so as to enable the movement or transfer of the payload 400 to the aircraft apparatus 100 for the placement thereof on this aircraft apparatus 100. In yet another variation of this embodiment of the present invention, the payload 400 gripped by the robotic manipulator or grip of the aircraft apparatus 200 may be further provided with a driven propulsion unit (not shown) operating under the control of the control module of the aircraft apparatus 200 or the control device of the system 1000 and configured to interact with at least one of the docking guides 300 on which there is placed or installed said payload 400 so as to enable the movement or transfer of this payload 400 along said at least one docking guide 300 to the aircraft apparatus 100 for the placement thereof on this aircraft apparatus 100. In another variation of this embodiment of the present invention, the payload 400 gripped by the robotic manipulator or grip of the aircraft apparatus 200 may be further provided with a driven carriage (not shown) operating under the control of the control module of the aircraft apparatus 200 or the control device of the system 1000, and the robotic manipulator or grip may be further configured to enable the placement of the gripped payload 400 on at least one of the docking guides 300 detachably coupling the aircraft apparatuses 100, 200 by means of said driven carriage of the payload 400, wherein the driven carriage of the payload 400 may be configured to move along said at least one docking guide 300 under the control of the control device so as to enable the movement or transfer of this payload 400 to the aircraft apparatus 100 for the placement thereof on this aircraft apparatus 100.

In some embodiment of the present invention, the housing 10 in the aircraft apparatus 200, which housing is provided with the payload 400, may be further provided with a docking housing guide (in particular, further to or instead of the functional beam 30), and the payload 400 itself may be installed, by means of a driven carriage being part of the docking module 420 and operating under the control of the control module of the aircraft apparatus 200 or the control device of the system 1000, on this housing guide of the aircraft apparatus 200, wherein the detachable coupling of the docking module of the aircraft apparatus 200 with at least one of the docking guides 300 detachably coupling the aircraft apparatuses 100, 200 to one another enables the coupling of said at least one docking guide 300 and said housing guide of the aircraft apparatus 200 to form a cluster guide and enables the movement of said driven carriage of the payload 400 along said cluster guide onto the aircraft apparatus 100 for moving or transmitting, by means of said cluster guide, this payload 400 onto the aircraft apparatus 100 so as to provide for the placement thereof in or on this aircraft apparatus 100.

In some other embodiment of the present invention, the aircraft apparatus 200 provided with the payload 400 may be further provided with one or more driven working elements or working members which operate under the control of the control module of the aircraft apparatus 200 or the control device of the system 1000 and which are configured to perform one of the following functional operations or actions: (i) gripping the payload 400 located or placed on at least one of the docking guides 300 detachably coupling the aircraft apparatuses 100, 200 to one another so as to enable the movement or transfer of the gripped payload 400 along said at least one docking guide 300 to the aircraft apparatus 100 for placement thereof on or in the aircraft apparatus 100, and (ii) acting upon the payload 400 located or placed on at least one of the docking guides 300 detachably coupling the aircraft apparatuses 100, 200 to one another so as to enable the movement or transfer of this payload 400 along said at least one docking guide 300 to the aircraft apparatus 100 for placement thereof on or in the aircraft apparatus 100. In one of the variations of this embodiment of the present invention, at least one of the driven working members or driven working elements, which may be further provided to the housing 10 in the aircraft apparatus 200, may be further configured to grip at least one of the docking guides 300 detachably coupling the aircraft apparatuses 100, 200 to one another (for example, after they have withdrawn from interaction with the docking modules, which are provided to the housings 10 in the both aircraft apparatuses 100, 200) so as to enable the placement thereof in/on the housing 10 in the aircraft apparatus 200 or to enable the interaction with said at least one docking guide 300 so as to enable the retraction of the latter into the housing 10 in the aircraft apparatus 200 or to enable the attraction of the latter to the housing 10 in the aircraft apparatus 200.

In some other embodiment of the present invention, the aircraft apparatus 100 may be further configured to accommodate or install the payload 400, having been transferred to same by means of at least one of the docking guides 300 detachably coupling the aircraft apparatuses 100, 200 to one another, in or on the housing 10 of this aircraft apparatus 100.

In some other embodiment of the present invention, the housing 10 in the aircraft apparatus 100 may be further provided with one or more housing guides (in particular, further to or instead of the functional beam 30 which is provided to the housing 10 in the aircraft apparatus 100), and at least one of the docking guides 300 detachably coupling the aircraft apparatuses 100, 200 to one another may be further configured to enable the detachable coupling thereof with at least one of said housing guides of the aircraft apparatus 100 so as to enable the movement of the payload 400, being moved or being transferred along said at least one docking guide 300 to the aircraft apparatus 100 from the aircraft apparatus 200, along said at least one housing guide of the aircraft apparatus 100.

In other embodiments of the present invention, the aircraft apparatus 100 may be further provided with a loading module (not shown) operating under the control of the control module of the aircraft apparatus 100 or the control device of the system 1000 and configured to interact with the payload 400 having been moved or transferred to this aircraft apparatus 100 so as to enable the placement thereof in or on the housing 10 of this aircraft apparatus 100. In one of the variations of this embodiment of the present invention, a loading module which may be further provided to the aircraft apparatus 100 may be a robotic manipulator or grip (not shown) operating under the control of the control module of the aircraft apparatus 100 or the control device of the system 1000 and configured to grip the payload 400 having been moved or transferred to this aircraft apparatus 100 so as to enable placement thereof in or on the housing 10 of this aircraft apparatus 100. In another variation of this embodiment of the present invention, the loading module which may be further provided to the aircraft apparatus 100 may be an attracting device (not shown) operating under the control of the control module of the aircraft apparatus 100 or of the control device of the system 1000 and configured to act upon the payload 400 moved or transferred to this aircraft apparatus 100 so as to enable the placement thereof in or on the housing 10 of this aircraft apparatus 100. In yet another variation of this embodiment of the present invention, the housing 10 in the aircraft apparatus 100 may be further provided with one or more weight sensors (not shown), each of which weight sensors may be configured to measure the weight of the payload 400, which may be installed or accommodated in said housing 10, in one of the spots of this housing 10 for accommodating the payload 400 and which weight sensors may each be configured to present the readings thereof to the control module of the aircraft apparatus 100 or the control device of the system 1000, wherein the control module of the aircraft apparatus 100 or the control device of the system 1000 in turn is further configured to generate control instructions or commands in response to said received readings of the weight sensors of the aircraft apparatus 100 so as to enable the presenting thereof to the loading module, which may be further provided to the aircraft apparatus 100, for accommodating the payload 400 in or on the housing 10 of this aircraft apparatus 100 depending on said readings of the weight sensors of the aircraft apparatus 100. In another variation of this embodiment of the present invention, the loading module, which may be further provided to the aircraft apparatus 100, may be installed on at least one additional housing guide of the aircraft apparatus 100 so as to move therealong in the longitudinal direction so as to enable the movement of the payload 400 with respect to the housing 10 of this aircraft apparatus 100.

In other embodiments of the present invention, at least one of the docking guides 300 detachably coupling the aircraft apparatuses 100, 200 to one another may be further provided with a gripping mechanism (not shown) operating under the control of the control module of the aircraft apparatus 100, of the control module of the aircraft apparatus 200, of the control unit of the docking guide 300 or of the control device of the system 1000 and configured to grip the payload 400 so as to enable the installation or suspension of this gripped payload 400 on at least one other of these docking guides 300 detachably coupling the aircraft apparatuses 100, 200 to one another, or on said at least one docking guide 300 with the gripping mechanism. In one of the variations of this embodiment of the present invention, the gripping mechanism, which may be provided to at least one of the docking guides 300 detachably coupling to one another the aircraft apparatuses 100, 200, may be configured to rotate so as to enable the rotation of the payload 400 gripped by said gripping mechanism with respect to said docking guide 300 with the gripping mechanism. In another variation of this embodiment of the present invention, the gripping mechanism, which may be provided to at least one of the docking guides 300 detachably coupling to one another the aircraft apparatuses 100, 200, may be configured to move along said at least one docking guide 300, on which this gripping mechanism is installed, so as to enable the movement of the payload 400, gripped by this gripping mechanism, along the docking guide, on which said payload 400 is installed or suspended.

In various embodiments of the present invention, the docking module provided to the aircraft apparatus 200 may be further configured to at least partially retract or attract at least one of the docking guides 300 detachably coupling the aircraft apparatuses 100, 200 to one another after the payload has been moved onto the aircraft apparatus 100 along at least one of said docking guides 300 detachably coupling the aircraft apparatuses 100, 200 to one another. Thus, in such embodiments of the present invention, the docking module of the aircraft apparatus 200 may retract or attract not only at least one or each of the docking guides 300 which was used to move or transfer therealong the payload 400 from the aircraft apparatus 200 to the aircraft apparatus 100, but also any other one of the docking guides 300 which were used to provide for a detachable coupling of the aircraft apparatuses 100, 200 to one another.

In various other embodiments of the present invention, the docking module provided to the aircraft apparatus 200 may be further configured to at least partially retract or attract at least one of the docking guides 300, detachably coupling the aircraft apparatuses 100, 200 to one another, under the control of the control module of the aircraft apparatus 200 or of the control device of the system 1000 in response to an information signal of the control module of the aircraft apparatus 100 or an information signal of the control device of the system 1000 on the completion of the movement or transfer of the payload 400 to the aircraft apparatus 100.

In various other embodiments of the present invention, at least one of the docking guides 300 detachably coupling the aircraft apparatuses 100, 200 to one another may be detachably installed on the aircraft apparatus 100 by means of one or more docking modules of the aircraft apparatus 100 which are configured to release said at least one docking guide 300 after the movement or transfer of the payload 400 from the aircraft apparatus 200 to the aircraft apparatus 100.

According to one embodiment of the present invention, at least one of the docking guides detachably coupling the aircraft apparatus 100, 200 to one another may be detachably installed on the aircraft apparatus 100 by means of one or more docking modules of the aircraft apparatus 100 operating under the control of the control module of the aircraft apparatus 100 or of the control device of the system 1000 and configured to release said at least one docking guide in response to an information signal from the control device on the completion of the movement or transfer of the payload 300 to the aircraft apparatus 100.

According to yet another embodiment of the present invention, the guide movement module installed in/on the aircraft apparatus 200 provided with the payload 400 and operating under the control of the control module of the aircraft apparatus 200 or of the control device of the system 1000 so as to enable the entrance into interaction with at least one of the docking guides 300, detachably coupling the aircraft apparatuses 100, 200 to one another, for enabling the movement of said at least one docking guide 300 onto the aircraft apparatus 200, may be a robotic manipulator or grip configured to grip said at least one docking guide 300 for placing same in or on the housing 10 of this aircraft apparatus 200.

According to another embodiment of the present invention, the guide movement module, installed in/on the aircraft apparatus 200 provided with the payload 400 and operating under the control of the control module of the aircraft apparatus 200 or of the control device of the system 1000 so as to enable the entrance into interaction with at least one of the docking guides 300, detachably coupling the aircraft apparatuses 100, 200 to one another, so as to enable the movement of said at least one docking guide 300 onto the aircraft apparatus 200, may be a retracting device configured to interact with said at least one docking guide 300 so as to enable the retraction thereof into the housing 10 of this aircraft apparatus 200 or enable the attraction thereof to the housing 10 of this aircraft apparatus 200 upon the actuation of said retracting device, wherein the aircraft apparatus 200 provided with the payload 400 may be further provided with a driven device operating under the control of the control module of the aircraft apparatus 200 or of the control device of the system 1000 and operably coupled to said retracting device so as to actuate same.

### Second system for moving a payload

Figs. 2.1-2.4 are a schematic representation one of the illustrative embodiments of the second system 2000 for moving a payload according to the second aspect of the present invention, comprising an aircraft apparatus 200 provided with a payload 400 analogously to the above-described system 1000, and a cluster aircraft apparatus 150 which is formed from two aircraft apparatuses 100 detachably or undetachably coupled to one another, configured both analogously to the above-described system 1000, and which is provided with a docking guide 300 configured analogously to the above-described system 1000. Thus, the system 200 substantially corresponds to the above-described system 100 with the exception that the aircraft apparatus provided with the docking guide 300 is a cluster aircraft apparatus 150 which now comprises two aircraft apparatuses 100 coupled to one another in such a way that the installation channels thereof of the functional beams 30 communicate with one another. Thus, most of the embodiments of the present invention described above with respect to system 1000 also apply to the description of the structure and functioning of the system 2000.

As shown in Fig. 2.1, in the system 2000, the docking guide 300 is extended from the cluster aircraft apparatus 150 and is brought into detachable interaction with the aircraft apparatus 200, wherein on said docking guide 300 there is placed or installed a payload 400. Of note, the cluster aircraft apparatus 150 and the aircraft apparatus 200 detachably coupled to one another by means of such docking guide 300 may in such state also move in the air or airspace, thereby performing the transportation of the payload 400 suspended or installed on said docking guide 300 between the cluster aircraft apparatus 150 and the aircraft apparatus 200.

As shown in Fig. 2.2, in the system 2000, the payload 400 may be moved or transferred to the aircraft apparatus 200 using the docking guide 300, and the docking guide 300 itself, after being used to move or transfer the payload 400 therealong to the aircraft apparatus 200, may be transferred or moved to the cluster aircraft apparatus 150 so as to provide for the placement thereof entirely in the cluster installation channel extending, or provided, in the cluster functional beam which is provided to the housing of such cluster aircraft apparatus 150.

As shown in Fig. 2.3, in the system 2000, the docking beam 300 may be extended from the cluster aircraft apparatus 150 so as to enable the entrance of the free end thereof into detachable interaction with the aircraft apparatus 200 to provide for a detachable coupling of the cluster aircraft apparatus 150 to the aircraft apparatus 200, wherein the payload 400 may be placed or installed on the aircraft apparatus 200.

As shown in Fig. 2.4, in the system 2000, the payload 400 may be moved or transferred along the cluster guide 300, which detachably couples the cluster aircraft apparatus 150 and the aircraft apparatus 200 to one another, to the cluster aircraft apparatus 150 so as to enable placement or installation thereof on this cluster aircraft apparatus 150, and said cluster guide 300 in turn (i.e. after completion of the process of moving or transferring the payload 400 to the cluster aircraft apparatus 150) may be moved or transferred to the aircraft apparatus 200 so as to enable the partial placement or installation thereof in the housing of the aircraft apparatus 200.

After placing the payload 400 on the cluster aircraft apparatus 150 and placing the docking guide 300 on the aircraft apparatus 200, these aircraft apparatuses 150, 200 may be directed, for example, to other target regions of space to perform docking to other aircraft apparatuses being part of the system 2000.

### Method for moving payload

Fig. 3 is a flow diagram showing the main operations of a method 500 of movement of a payload according to the third aspect of the present invention, wherein the method 500 of movement of a payload shown in Fig. 3 may be performed using the above system 1000 or the above system 2000 for moving a payload which system may be implemented in accordance with any one of the relevant embodiments of the present invention described above herein.

In particular, the method 500 for moving a payload shown in Fig. 3 comprises the following three main operations or three main steps 510, 520 and 530, wherein the step 510 comprises docking, to one another in the air, at least one aircraft apparatus 200, on which there is installed a payload 400, and at least one aircraft apparatus 100, on which there are installed one or more docking guides 300, using at least one of said docking guides 300 under the control of the control device of the system 1000. Next, the step 520 comprises enabling the movement of the payload 400 along the docking guides 300, which detachably couple the aircraft apparatuses 100, 200, to/from said at least one aircraft apparatus 100. At the end of the method 500, the step 530 comprises enabling the transfer of at least one or each of the docking guides 300, which are employed to provide for a detachable coupling between the aircraft apparatuses 100, 200, to the aircraft apparatus 200 upon the placement of the payload 400 on/in the aircraft apparatus 100.

The provided illustrative embodiments of the present invention, examples and description serve only to facilitate understanding of the principles of the claimed invention and are not limiting. Other possible embodiments of the present invention or modifications or improvements to the above embodiments of the present invention will suggest themselves to one skilled in the art after reading the above description. The scope of the present invention is limited only by the appended claims.

## Claims

1. A system for moving a payload, comprising:
two or more aircraft apparatuses, each provided with one or more air propulsion units enabling said aircraft apparatus to be moved through the air, and
one or more control devices configured to control the operation of said aircraft apparatuses, wherein
at least on a first one of said aircraft apparatuses there is detachably installed a payload,
at least on a second one of said aircraft apparatuses there is detachably installed one or more docking guides configured to enable the detachable docking, in the air, of said at least one first aircraft apparatus and said at least one second aircraft apparatus for moving said payload along said at least one docking guide to said at least one second aircraft apparatus, followed by the transfer of at least one of said docking guides to said at least one first aircraft apparatus.

2. The system according to claim 1, wherein said first aircraft apparatus with a payload is provided with a docking module configured to detachably couple to said at least one docking guide of the second aircraft apparatus.

3. The system according to claim 2, wherein the control device is communicatively coupled to the docking module to control the operation thereof.

4. The system according to claim 2, wherein the payload is installed on said first aircraft apparatus so as to enable the movement thereof onto at least one of said docking guides of the second aircraft apparatus or the placement thereof on said at least one docking guide of the second aircraft apparatus upon a detachable coupling of said docking guides to the docking module.

5. The system according to claim 4, wherein the first aircraft apparatus with a payload is further provided with a payload movement module operating under the control of the control device and configured to interact with said payload present on said at least one docking guide so as to enable the movement thereof along said at least one docking guide onto said second aircraft apparatus.

6. The system according to claim 5, wherein the payload movement module is a robotic manipulator or grip operating under the control of the control device and configured to grip the payload present on said at least one docking guide so as to enable the movement of the gripped payload along said at least one docking guide onto said second aircraft apparatus.

7. The system according to claim 5, wherein the payload movement module is a pusher configured, when actuated, to act upon the payload present on said at least one docking guide so as to enable the movement of this payload along said at least one docking guide onto said second aircraft apparatus, wherein the first aircraft apparatus with a payload is further provided with a driven device operating under the control of the control device and operably coupled to said pusher so as to enable the actuation of this pusher.

8. The system according to claim 1, wherein the first aircraft apparatus with a payload is further provided with a robotic manipulator or grip operating under the control of the control device and configured to grip the payload so as to enable the placement of the gripped payload on at least one of said docking guides of the second aircraft apparatus.

9. The system according to claim 8, wherein the robotic manipulator or grip is further configured to enable the movement of the gripped payload along said at least one docking guide onto said second aircraft apparatus.

10. The system according to claim 8, wherein said at least one docking guide is further provided with a driven carriage, the robotic manipulator or grip is further configured to enable the detachable placement of the gripped payload on said carriage or to enable detachable docking of the gripped payload to said carriage, and the driven carriage is configured to move along said at least one docking guide under the control of the control device so as to enable the movement of the payload onto said second aircraft apparatus.

11. The system according to claim 8, wherein said gripped payload is further provided with a driven propulsion unit operating under the control of the control device and configured to interact with said at least one docking guide so as to enable the movement of the payload along said at least one docking guide onto said second aircraft apparatus.

12. The system according to claim 8, wherein said gripped payload is further provided with a driven carriage operating under the control of the control device, the robotic manipulator or grip is further configured to enable the placement of the gripped payload on said at least one docking guide by means of said driven carriage, and the driven carriage is configured to move along said at least one docking guide under the control of the control device so as to enable the movement of the payload onto said second aircraft apparatus.

13. The system according to claim 2, wherein the housing of the first aircraft apparatus with said payload is further provided with a docking guide, and the payload is installed, by means of a driven carriage operating under the control of the control device, on the docking guide, wherein the detachable coupling of the docking module of said first aircraft apparatus to said at least one docking guide of the second aircraft apparatus enables the coupling between said at least one docking guide of the second aircraft apparatus and said docking guide of the first aircraft apparatus to form a cluster guide and enables the movement of said carriage of the payload along said cluster guide to said second aircraft apparatus, followed by the transfer of the cluster guide to said first aircraft apparatus.

14. The system according to claim 2, wherein the docking module, which is provided to the first aircraft apparatus with a payload, is further configured to at least partially retract or attract at least one of said docking guides after the payload has been moved to said at least one second aircraft apparatus.

15. The system according to claim 3, wherein the docking module, which is provided to the first aircraft apparatus with a payload, is further configured to at least partially retract or attract at least one of said docking guides under the control of the control device in response to a signal of the control device on the movement of the payload to said at least one second aircraft apparatus.

16. The system according to claim 1, wherein at least one of said docking guides of the second aircraft apparatus is detachably coupled to the housing of this second aircraft apparatus or is detachably installed in the housing of this second aircraft apparatus.

17. The system according to claim 1, wherein at least one of said docking guides is detachably installed on said at least one second aircraft apparatus by means of one or more docking modules of said second aircraft apparatus, which are configured to release said at least one docking guide after the payload has been moved to said at least one second aircraft apparatus.

18. The system according to claim 1, wherein at least one of said docking guides is detachably installed on said at least one second aircraft apparatus by means of one or more docking modules of said second aircraft apparatus, which operate under the control of the control device and which are configured to release said at least one docking guide in response to a signal of the control device on the completion of the movement of the payload to said at least one second aircraft apparatus.

19. The system according to claim 1, wherein the first aircraft apparatus with a payload is further provided with a guide movement module operating under the control of the control device and configured to interact with at least one of said docking guides so as to enable the movement thereof onto said first aircraft apparatus.

20. The system according to claim 19, wherein the guide movement module is a robotic manipulator or grip operating under the control of the control device and configured to grip said at least one docking guide for placing same in or on the housing of said first aircraft apparatus.

21. The system according to claim 19, wherein the payload movement module is a retracting device operating under the control of the control device and configured to interact with said at least one docking guide so as to enable the retraction thereof into the housing of said first aircraft apparatus or to enable the attraction thereof to the housing of said first aircraft apparatus upon the actuation of said retracting device, wherein the first aircraft apparatus with a payload is further provided with a driven device operating under the control of the control device and operably coupled to said retracting device so as to enable the actuation thereof.

22. The system according to claim 1, wherein the first aircraft apparatus with a payload is further provided with one or more driven working elements or working members operating under the control of the control device and configured to
grip the payload located on said at least one docking guide so as to enable the movement of the gripped payload along said at least one docking guide onto said second aircraft apparatus, or
act upon the payload located on said at least one docking guide so as to enable the movement of this gripped payload along said at least one docking guide onto said second aircraft apparatus.

23. The system according to claim 22, wherein at least one of said driven working members or at least one of said driven working elements is further configured to grip said at least one docking guide so as to enable the placement thereof in or on the housing of said first aircraft apparatus, or configured to interact with said at least one docking guide so as to enable the retraction thereof into the housing of said first aircraft apparatus or enable the attraction thereof to the housing of said first aircraft apparatus.

24. The system according to claim 1, wherein the second aircraft apparatus is further configured to accommodate or install a payload, having been transferred along said at least one docking guide to the second aircraft apparatus, in or on the housing of this second aircraft apparatus.

25. The system according to claim 1, wherein the second aircraft apparatus is further provided with one or more housing guides, and said at least one docking guide is further configured to enable the detachable coupling of same to at least one of said housing guides of the second aircraft apparatus so as to enable the movement of the payload, being transferred along said at least one docking guide to the second aircraft apparatus, along said at least one housing guide of this second aircraft apparatus.

26. The system according to claim 1, wherein said second aircraft apparatus is further provided with a loading module operating under the control of the control device and configured to interact with the payload, having been transferred to this second aircraft apparatus, so as to enable the placement thereof in or on the housing of this second aircraft apparatus.

27. The system according to claim 26, wherein the loading module of the second aircraft apparatus is a robotic manipulator or grip operating under the control of the control device and configured to grip the payload, having been transferred to this second aircraft apparatus, so as to enable the placement thereof in or on the housing of this second aircraft apparatus.

28. The system according to claim 26, wherein the loading module is an attracting device operating under the control of the control device and configured to act upon the payload, having been transferred to this second aircraft apparatus, so as to enable the placement thereof in or on the housing of this second aircraft apparatus.

29. The system according to claim 1, wherein at least two of said docking guides are arranged parallel to one another, perpendicular to one another or at a predetermined angle with respect to one another.

30. The system according to claim 1, wherein at least one of said docking guides is installed on a rotary device, which is provided to said second aircraft apparatus, so as to enable the rotation of said at least one docking guide by a predetermined angle of rotation.

31. The system according to claim 1, wherein at least one of said docking guides is rotatably installed on the housing of said second aircraft apparatus, and said housing further comprises a drive device operably coupled to said at least one docking guide or configured to interact with said at least one docking guide so as to enable rotation of the latter by a predetermined angle of rotation.

32. The system according to claim 1, wherein at least one of said docking guides is configured telescopic, and the housing of said second aircraft apparatus further comprises a drive device operating under the control of the control device and operably coupled to said at least one docking guide or configured to interact with said at least one docking guide so as to enable at least partial extension of the latter.

33. The aircraft apparatus according to claim 32, wherein the control device is further configured to present control commands to the drive device so as to enable at least partial retraction of said extended docking guide.

34. The system according to claim 1, wherein the housing of said second aircraft apparatus is configured to tilt or rotate by a predetermined angle with respect to at least one of said docking guides.

35. The system according to claim 1, wherein the housing of said second aircraft apparatus is configured to alter the shape thereof and/or the dimensions thereof under the control of the control device while the docking between said at least one first and at least one second aircraft apparatuses by means of said docking guides.

36. The system according to claim 1, wherein at least one of said docking guides is at least partially configured bendable or flexible.

37. The system according to claim 1, wherein at least one of said docking guides is configured rectilinear or curvilinear.

38. The system according to claim 1, wherein at least one of said docking guides is configured to enable the movement therealong of the payload along at least one of the three coordinate axes or is configured to move with respect to the housing of said second aircraft apparatus so as to enable movement of the payload installed on said at least one docking guide with respect to the housing of said second aircraft apparatus.

39. The system according to claim 1, wherein at least one of said docking guides is comprised of two or more portions, at least one of which is configured movable, and the housing of said second aircraft apparatus further comprises a drive device operating under the control of the control device and operably coupled to said at least one movable portion of the docking guide so as to enable movement thereof with respect to the remaining portions of this docking guide for altering the shape of said at least one docking guide.

40. The system according to claim 26, wherein the housing of said second aircraft apparatus is further provided with one or more weight sensors, each of which weight sensors is configured to measure the weight of the payload in one of the spots of said housing for accommodating the payload and which weight sensors are configured to present the readings thereof to the control device, and the control device enables the presenting of the control commands to the loading module for accommodating the payload in or on said housing depending on said readings of the weight sensors.

41. The system according to any one of claims 26, 27 and 40, wherein the loading module is installed on at least one additional housing guide of the second aircraft apparatus so as to move therealong so as to enable the movement of the payload with respect to the housing of said second aircraft apparatus.

42. The system according to claim 1, wherein at least one of said docking guides is provided with a docking module configured to detachably couple said at least one docking guide to the housing of the first aircraft apparatus with a payload.

43. The system according to claim 1, wherein at least one of said docking guides is further provided with a gripping mechanism operating under the control of the control device and configured to grip the payload so as to enable the installation or suspension of the gripped payload on at least one other of said docking guides or on said at least one docking guide with the gripping mechanism.

44. The system according to claim 43, wherein said gripping mechanism of the docking guide is configured to rotate so as to enable the rotation of said gripped payload with respect to the docking guide with the gripping mechanism.

45. The system according to claim 43, wherein said gripping mechanism of the docking guide is configured to move along the docking guide on which it is installed so as to enable the movement of said gripped payload along the docking guide on which said payload is installed or suspended.

46. A method for moving a payload, comprising the steps of:
docking to one another in the air at least one first aircraft apparatus on which there is installed a payload and at least one second aircraft apparatus on which there are installed one or more docking guides using at least one of said docking guides under the control of a control device,
enabling the movement of the payload along said at least one docking guide into said at least one second aircraft apparatus, and
enabling the transfer of said at least one docking guide to said at least one first aircraft apparatus while the placement of the payload in said at least one second aircraft apparatus.
